(19)

(11) **EP 4 050 476 B1**

(12) **EUROPEAN PATENT SPECIFICATION**

(45) Date of publication and mention of the grant of the patent:
**11.03.2026 Bulletin 2026/11**

(21) Application number: **22168700.7**

(22) Date of filing: **08.09.2016**

(51) International Patent Classification (IPC):
***G06F 8/65*** *(2018.01)* ***H04L 67/12*** *(2022.01)*
***H04W 4/40*** *(2018.01)* ***H04W 4/48*** *(2018.01)*
***H04W 4/80*** *(2018.01)*

(52) Cooperative Patent Classification (CPC):
**G06F 8/65; H04L 67/12; H04W 4/40; H04W 4/48; H04W 4/80**

# (54) METHOD FOR REAL TIME WIRELESS ECU MONITORING AND REPROGRAMMING

VERFAHREN ZUR DRAHTLOSEN ECHTZEIT-ÜBERWACHUNG UND -UMPROGRAMMIERUNG EINER MOTORSTEUEREINHEIT

PROCÉDÉ DE SURVEILLANCE ET DE REPROGRAMMATION EN TEMPS RÉEL D’UNE UNITÉ DE COMMANDE MOTEUR SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2016 US 201615228926**

(43) Date of publication of application:
**31.08.2022 Bulletin 2022/35**

(62) Document number(s) of the earlier application(s) in accordance with Art. 76 EPC:
**16834009.9 / 3 332 344**

(73) Proprietor: **Gintz, Brad**
**Grand Cayman KY1-1003 (KY)**

(72) Inventors:
- **GINTZ, Brad**
**Grand Cayman, KY1-1003 (KY)**
- **WOOD, Thomas**
**Grand Cayman, KY1-1110 (KY)**

(74) Representative: **Forresters IP LLP**
**Skygarden**
**Erika-Mann-Straße 11**
**80636 München (DE)**

(56) References cited:
**EP-A2- 2 869 221**
**WO-A1-2013/086345**
**US-A1- 2006 047 381**
**US-A1- 2013 246 135**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 050 476 B1

## Description

### BACKGROUND

An engine control unit or an "ECU" is a widely used type of electronic controller that controls a series of actuators on an internal combustion engine to ensure optimal engine performance. It does this by reading values of a multitude of sensors in the engine bay and interpreting the data it receives using lookup tables which adjust engine actuators appropriately.

The ECU monitors various sensors on the automobile such as sensors for oxygen level, coolant temperature, mass air flow, air intake temperature, crank shaft angle, throttle position, cam shaft angle and engine knock. Lookup tables provide feedback information for adjustment and control of ignition timing, cam shaft position, fuel injector input, fuel pump input, fuel pump pressure, cooling fan speed, admission control systems, forced air induction controls, traction controls and transmission gear selections. In many situations, ECUs also send error codes to the vehicle dashboard to indicate immediate problems, such as overheating, or maintenance requirements, like oil changes. In some cases, the error codes activate warning lights which must be deactivated by the dealer.

Certain classes of ECUs are programmable. Modern ECUs incorporate a microprocessor which can process inputs from engine sensors in real time. The microprocessor stores its programming in firmware which is resident in flash memory or e-proms attached to the CPU of the microprocessor.

Programmable ECUs are required, for example, where significant aftermarket performance enhancing modifications have been made. Such modifications often include the addition of a turbo charger, intercooler or modified exhaust system. Programmable ECU's are also used for several vehicle systems, such as engine control module (ECM), transmission control module (TCM), body control module, anti-lock brake system (ABS), airbag control module, and so on, that each receive routine updates from the manufacturer of the vehicle. Each ECU is remapped or reprogrammed to adapt the performance of the involved system to match the required modifications and/or to update the software and parameters of the ECU. Other changes for high performance engines which can be remapped in an ECU include ignition timing, maximum RPM, water temperature correction, transient fueling, low fuel pressure modifiers and a closed loop lambda (in order to modify a target air/fuel ratio), turbo charger waste gate control, staged fuel injection, variable cam timing, gear control and turbo charger anti-lag.

Prior art arrangements are known from WO 2013/086345, US 2013/0246135, EP 2869221 and US 2006/047381.

### SUMMARY

According to an aspect of the present invention, there is provided a method as recited by Claim 1. Further, preferable, features are defined by the dependent claims.

### BRIEF DESCRIPTION OF THE DRAWINGS

Figure 1 is a system diagram of a cloud based automotive technician system.
Figure 2A is a sequence diagram of a method for updating parameters on an automotive controller.
Figure 2B is a sequence diagram of a method for interaction with an automotive controller and a client device.
Figure 3 is a block diagram of a cloud based automotive technician system.
Figures 4A and 4B are a sequence diagrams of a method for updating an automotive controller based on data from the automotive controller.
Figure 5A is a diagram of a user interface of a preferred embodiment for a multiple gauge view with eight gauges.
Figure 5B is a diagram of a user interface of a preferred embodiment for dragging and dropping a gauge.
Figures 6A, 6B, and 6C are diagrams of a user interface of a preferred embodiment for a multiple gauge view with four sliding gauges.
Figures 7A, 7B, and 7C are diagrams of a user interface of a preferred embodiment for selecting a gauge.
Figures 8A and 8B are diagrams of a user interface of a preferred embodiment for selecting a first gauge style.
Figures 9A and 9B are diagrams of a user interface of a preferred embodiment for selecting a second gauge style.
Figures 10A and 10B are diagrams of a user interface of a preferred embodiment for selecting a third gauge style.
Figures 11A and 11B are diagrams of a user interface of a preferred embodiment for selecting a fourth gauge style.
Figures 12A through 12I are diagrams of a user interface of a preferred embodiment for adjusting parameters.
Figures 13A and 13B are diagrams of a user interface of a preferred embodiment for selecting units of a gauge.
Figures 14A through 14E are diagrams of a user interface of a preferred embodiment for a multiple gauge view with five gauges.

Figures 15A through 15D are diagrams of a user interface of a preferred embodiment for selecting gauges for a multiple gauge view.

Figures 16A through 16E are diagrams of a user interface of a preferred embodiment for vehicle management.

Figures 17A through 17C are diagrams of a user interface of a preferred embodiment for displaying diagnostics.

Figures 18A and 18B are diagrams of a user interface of a preferred embodiment for data log management.

Figures 19A through 19D are diagrams of a user interface of a preferred embodiment for settings management.

Figures 20A through 20D are diagrams of databases and records of a preferred embodiment.

Figure 21 is a block diagram of a local device of a preferred embodiment.

## DETAILED DESCRIPTION

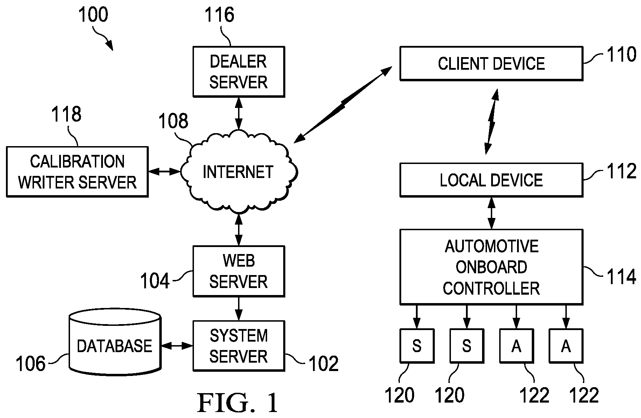

Referring to Figure 1, system **100** is provided. System **100** includes system server **102** connected to Internet **108** through web server **104.** The system server also includes database **106.**

Client device **110** is connected through a mobile network to Internet **108.** Client device **110** is also connected to local device **112.** In a preferred embodiment the local device establishes a Wi-Fi or Bluetooth connection between the client device and the automobile. Local device **112** is hardwired to the automotive controller **114.** Automotive controller **114** is connected to sensors **120** and actuators **122** resident on the vehicle. The sensors and actuators communicate with the onboard controller through a CAN BUS (also known as a controller area network (CAN) bus) as is known in the art.

Client device **110,** acts as a client of system server **102,** and as a client of local device **112.** Embodiments of client device **110** include any handheld wireless device, such as, a smart phone, a tablet computer, a notebook computer, a netbook computer, and so on.

Dealer server **116** is also connected to Internet **108** and communicates through the Internet to both the system server and the local device. Similarly, calibration writer server **118** is connected through the Internet to system server **102** and client device **110.**

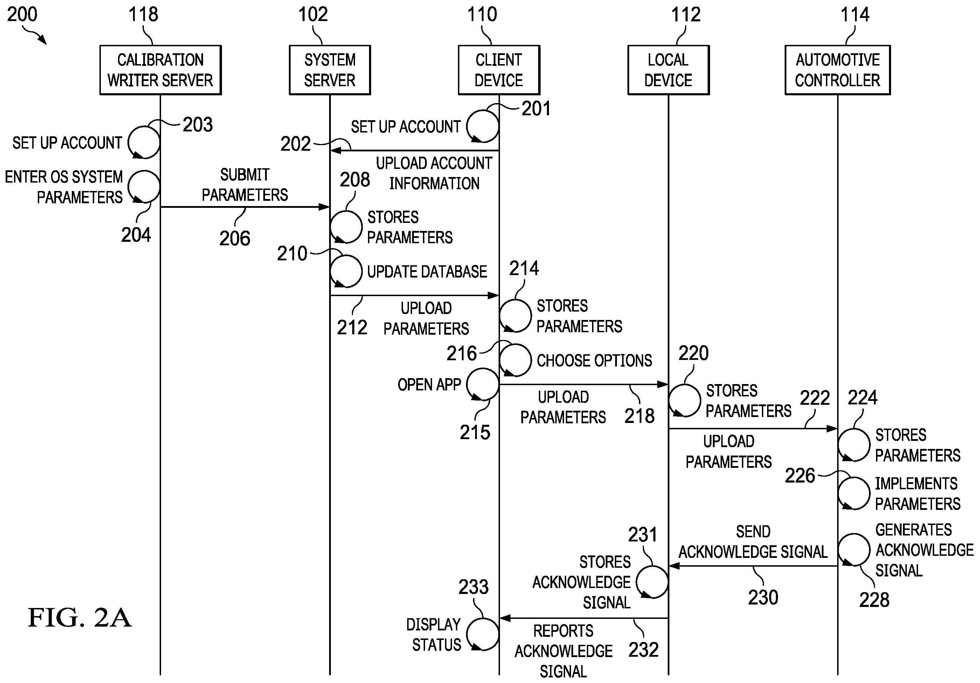

Referring to Figure 2A, operation of a preferred embodiment **200** will be described. In use, the device allows recording and viewing of automobile information, diagnostics, automobile updates for onboard computers, and data logging to allow study of driving habits to research fuel economy.

At step **201,** the client device opens the application and sets up an account by entering certain demographic information. At step **202,** the application uploads the account information to system server **102.**

At step **203,** the calibration writer server sets up an account through a form served up through the Internet from the system server. The calibration writer server includes account information such as name, address, email address, and submit computer Cal/Pid. At step **204,** calibration writer server inputs a set of operating system parameters which include programming information and look up tables for the onboard controller. At step **206,** the parameters are submitted to system server **102.** At step **208,** system server **102** stores the parameters and the account implementation. At step **210,** the database is updated by the system server with the new parameters and associated with the calibration writer server. At step **212,** the system server uploads the parameters to client device **110** via a wireless network.

In an alternative embodiment, a technician downloads the parameters or firmware from calibration writer server **118** via a web browser. The technician then uses system server **102** to download the updated parameters or firmware to smart phone **110.**

At step **214,** a client device stores the parameters. At step **215,** client device opens an application (or "App") which displays the parameters and certain options to the user. At step **216,** the client device receives options from the user as to which parameters to implement. At step **218,** the chosen parameters are uploaded to the local device via a Wi-Fi or Bluetooth connection. At step **220,** the local device stores the parameters and initiates certain timing functions such as onboard recording and storage of data.

At step **222,** the chosen parameters are uploaded to the automotive controller. At step **224,** the automotive controller stores the new parameters and lookup tables. At step **226** the automotive controller implements the new parameters and lookup tables. At step **228,** the automotive controller generates an acknowledge signal. At step **230,** the acknowledge signal is sent to the local device. At step **231,** the local device stores the acknowledge signal. At step **232,** the local device reports the acknowledge signal to client device **110** via the WiFi or Bluetooth connection. At step **233,** the client device stores the acknowledge signal and the App displays the status of the local device and the uploaded parameters.

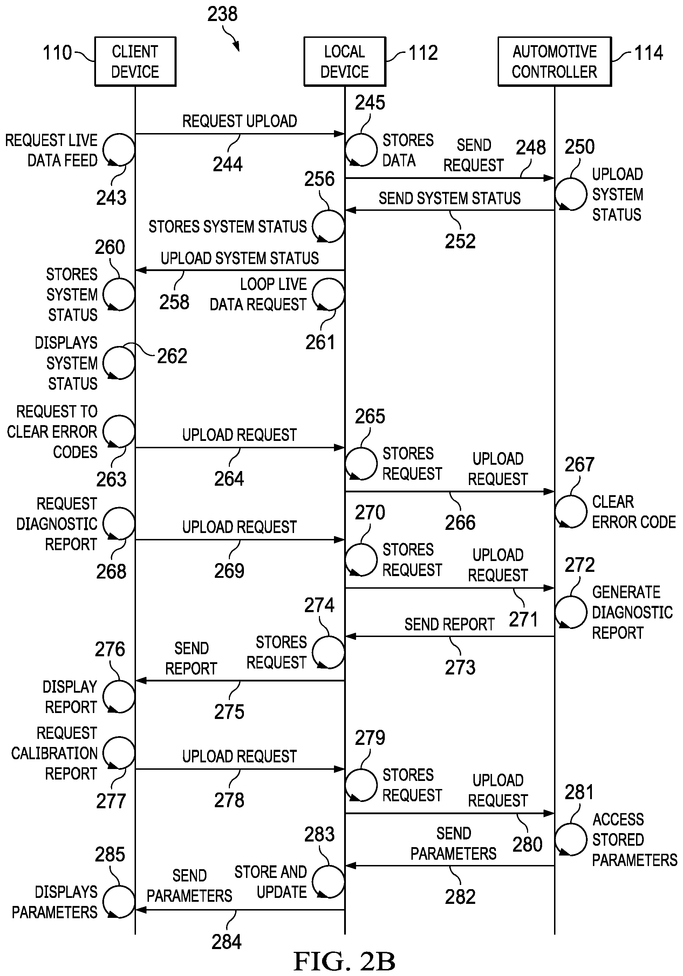

Referring to Figure 2B, an alternate preferred embodiment **238** is described. At step **243,** the client device chooses a target for a feed of live data from the automotive controller. Step **244,** the client device transmits the request to the local device. At step **245,** the local device stores live data request. At step **248,** the local device sends a request for live data to automotive controller **114.** At step **252,** the system status is sent to the local device. At step **256,** the local device stores the system status. At step **258,** the local device uploads the system status to client device **110.** At step **250,** the automotive controller uploads the system status from the automobile to the local device. At step **260,** client device stores the system status. At step **262,** the App displays the system status. The display is refreshed as updated system status is received from the local device. At step **261,** the local device enters a loop to repeatedly request system status from the automotive controller.

At step **263,** client device **110** chooses an option on the application to clear error codes. At step **264,** the request is uploaded to the local device. At step **265,** the request is stored in memory on the local device. At step **266,** the request is uploaded to the automotive controller. At step **267,** the automotive controller acknowledges the request and clears the error code.

At step **268,** the client device chooses an option on the application to request a diagnostic report. At step **269,** the request is uploaded to the local device. At step **270,** the local device stores the request. At step **266,** the local device uploads the request to the automotive controller. At step **271,** the automotive controller generates the diagnostic report. At step **272,** the diagnostic report is sent to the local device. At step **273,** the local device stores the diagnostic report, according to date and time, in memory. At step **274,** the diagnostic report is sent to the client device. At step **275,** the diagnostic report is displayed according to the request of the user.

At step **276,** the client device, through use of the application requests a calibration report. At step **277,** the calibration request is uploaded to the local device. At step **278,** the local device stores the request for calibration. At step **279,** the local device forwards the request to the automotive controller. At step **280,** the automotive controller accesses the currently stored parameters and the calibration. At step **281,** the parameters are sent to the local device. At step **282,** the local device stores the current set of parameters according a date and time stamp. At step **283,** the local device sends the parameters to the client device. At step **284,** the application on the client device displays the requested calibration parameters.

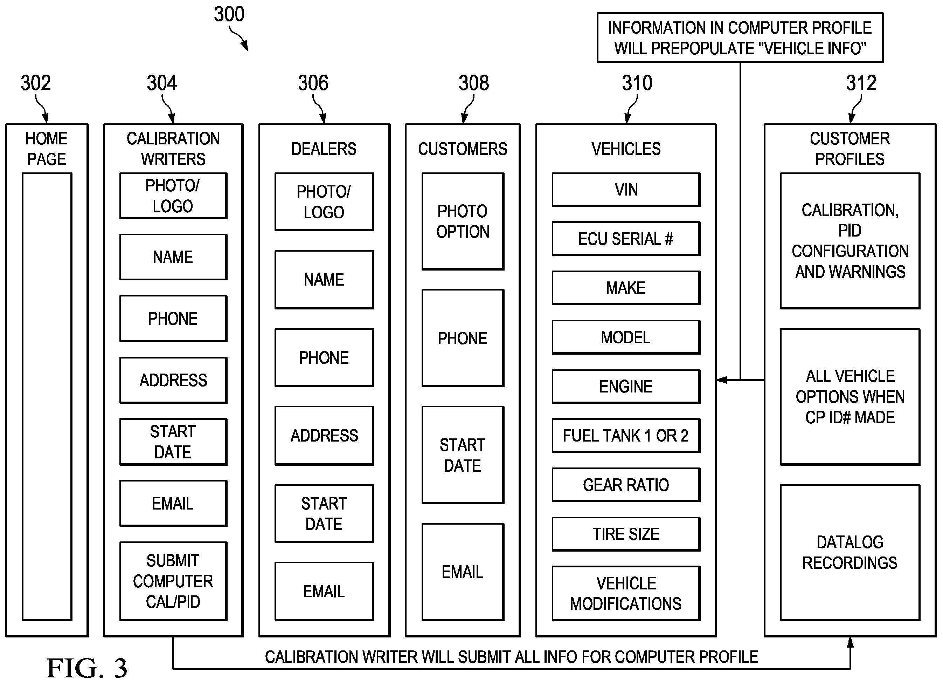

Referring to Figure 3, a schematic map **300** of the setup of system server **102** and certain functions of a preferred embodiment will be described.

System server **102** presents a set of webpages for the various users of the system through web server **104** using a user/password interface. At **302, 304,** and **306** a schematic of the local home page is shown. Local home page provides options for a choice of a user type for each of calibration writer server, a dealer, and a customer or "end user." The database includes records for each vehicle **310** and each computer profile ID number **312.** Each record **310** includes vehicle identification number, ECU serial number, make, model, engine, fuel tank number, gear ratio, tire size and vehicle modification categories. Each record is associated with a particular vehicle entered into the system. Computer profile ID number **312** is a database entry including vehicle, calibration, PID configuration, and warning type. Computer profile ID number **312** also includes vehicle options and datalog recordings for each vehicle.

Calibration writers webpage **304** includes forms for entry of a data record for users who input engine control parameters. Each data record includes entries for photos or logos, name, phone, address, start date, email and computer Cal/Pid. When the form is complete, upon entry, system server **102** enters the data from the data form into a record into the database. The system server then copies the data record into computer profiles ID number **312.** All reports generated by the automotive controller at the request of the local device are associated with current calibration of the vehicle when stored in memory. In a preferred embodiment, the data in the record is then copied directly into memory at vehicles **310.**

The dealers webpage **306** serves up a form for data entry including data related to photo/logo, name, phone, address, start date and email address. The "dealers" in a preferred embodiment are typically maintenance shops which service vehicles but do not write calibrations.

The customers webpage **308** includes a form for entry of data regarding photo, phone number, start date and email address. The web form also enables the customer to request download of an application to be locally installed. The APP GUI provides access to the functions of the local device. In a preferred embodiment, the functions include requesting a report of a current calibration, requesting a live report of engine status, requesting a diagnosis report, requesting that an error code be cleared and uploading a calibration update from a dealer or manufacturer.

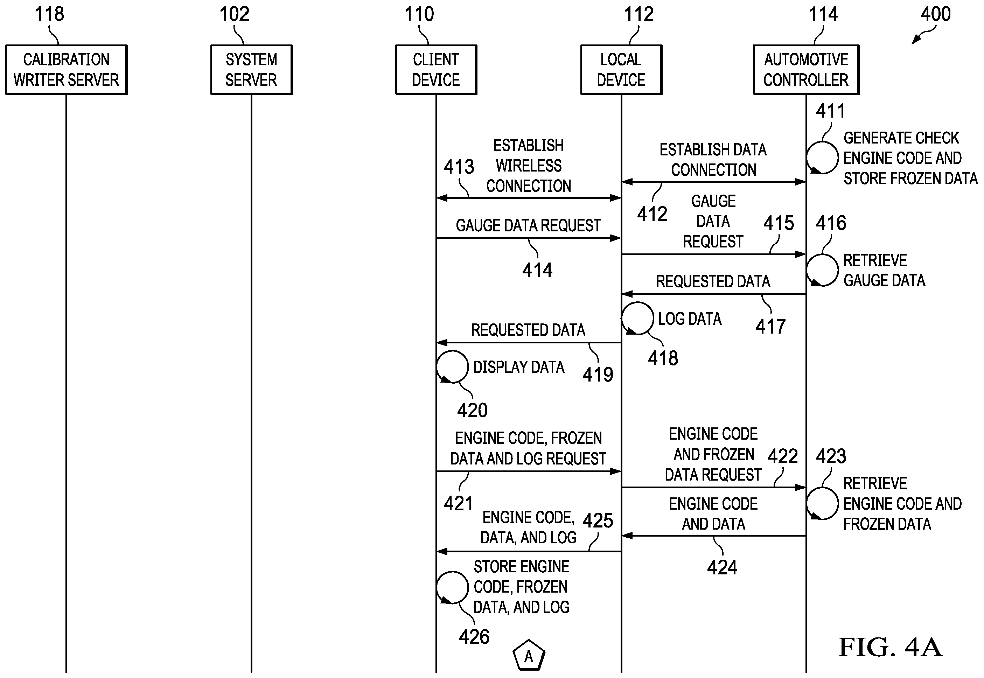

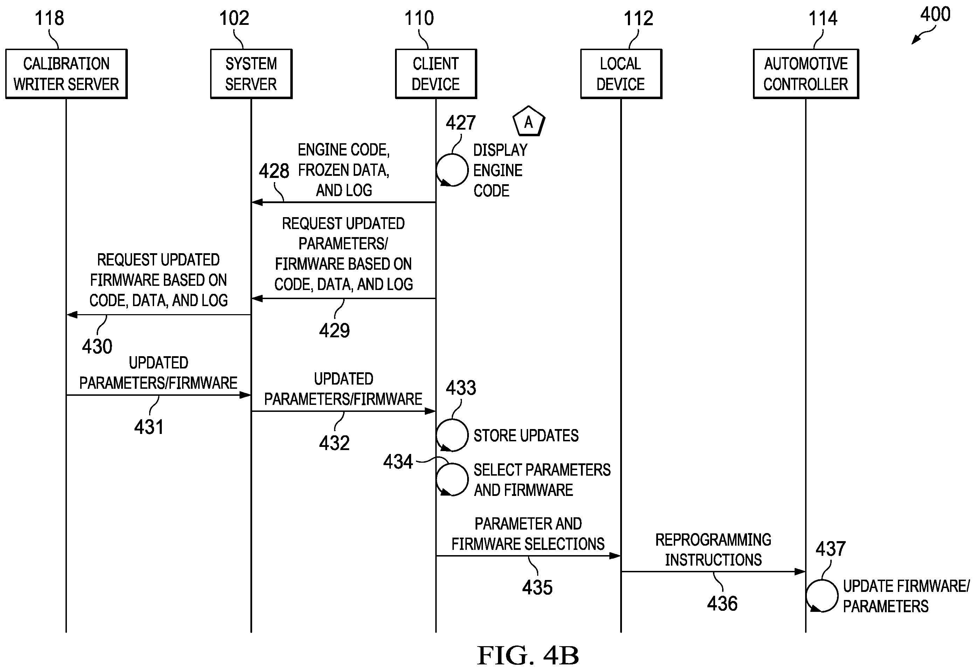

Figures 4A and 4B show sequence diagrams of a method for updating an automotive controller based on data from the automotive controller.

A preferred embodiment of local device **112** includes the Freescale IMX28 Microcontroller, a UART for translation between parallel and serial data forms, Wi-Fi connectivity employing the IEEE 802.11 standard or other wireless protocol for communication between client device **110** and the local device **112** and provisions for a local interconnect network LIN for communication between vehicle components and a CAN BUS for communication between microcontrollers and other devices.

Referring to Figures 4A and 4B, method **400** updates engine parameters in response to a check engine code (also referred to as a diagnostic trouble code (DTC)) being generated by automotive controller **114.** The method includes one or more messages passed between calibration writer server **118,** system server **102,** client device **110,** local device **112,** and automotive controller **114.**

At step **411,** automotive controller **114** generates a check engine code and freezes a frame of data. The check engine code identifies a problem with the vehicle. The frozen data indicates the status of the vehicle at the time when the problem that caused the check engine code to be generated occurred.

At step **412,** a data connection is established between local device **112** and automotive controller **114.** In one embodiment, the data connection is established by connecting local device **112** to an onboard diagnostics port that is connected to a CAN BUS to which automotive controller **114** is connected.

At step **413,** a wireless connection is established between client device **110** and local device **112.** In one embodiment, local device **112** acts as a wireless local area network (WLAN) access point to which client device **110** can connect. In establishing the wireless connection, transmission control protocol (TCP) socket is opened between client device **110** and local device **112** so that data can be passed back and forth between client device **110** and local device **112** using JavaScript Object Notation (JSON) messages.

At step **414,** a request for gauge data is sent from client device **110** and is received by local device **112.** In one embodiment, the request is sent using JSON using the TCP socket. For each of the one or more gauges displayed by client device **110,** a gauge data request is sent. After receiving the request from client device **110** by local device **112,** client device **110** is subscribed to and receives notifications from local device **112** that include updated data to be displayed on the gauge associated with the gauge data request.

At step **415,** a data request is sent from local device **112** and is received by automotive controller **114.**

At step **416,** automotive controller **114** retrieves the gauge data. In one embodiment, automotive controller **114** retrieves parameter identifier (PID) data that is associated with the gauge data.

At step **417,** the data is sent from automotive controller **114** and is received by local device **112.**

Optionally at step **418,** local device **112** records the data received from automotive controller **114** in a log file on local device **112.**

At step **419,** the requested data is sent from local device **112** and is received by client device **110.** In one embodiment, client device **110** is subscribed to local device **112** so as to receive a notification from local device **112** each time local device **112** receives updated data from automotive controller **114.**

At step **420,** the data is displayed by client device **110.** The layout settings that describe the look and feel of the gauge are stored on client device **110** and the data is displayed in accordance to the layout settings.

At step **421,** a request for the engine code, the frozen data, and optionally the log data is sent from client device **110** and is received by local device **112.**

At step **422,** a request for the engine code and the frozen data is sent from local device **112** and is received by automotive controller **114.**

At step **423,** automotive controller **114** retrieves the engine code and frozen data that were generated in step **411.**

At step **424,** the engine code and frozen data are sent from automotive controller **114** and are received by local device **112.**

At step **425,** the engine code, frozen data, and optional log are sent from local device **112** and are received by client device **110.**

At step **426,** client device **110** stores the engine code, frozen data, and optional log.

At step **427,** client device **110** displays the engine code.

At step **428,** the engine code, frozen data, and optional log is sent from client device **110** and is received by system server **102.**

At step **429,** a request for updated engine parameters is sent from client device **110** and is received by system server **102.**

At step **430,** a request for updated engine parameters is sent from system server **102** and is received by calibration writer server **118.**

At step **431,** updated parameters and/or firmware are sent from calibration writer server **118,** and are received by system server **102.**

At step **432,** the updated parameters and firmware are sent from system server **102** and are received by client device **110.**

At step **433,** the updated parameters and firmware are stored on client device **110.**

At step **434,** the technician selects one or more parameters and firmware with which to update the vehicle.

At step **435,** the selected parameters and firmware are sent from client device **110** and are received by local device **112.** One or more parameters and the firmware may be selected to be updated and are sent.

At step **436,** reprogramming instructions are sent from local device **112** and are received by automotive controller **114.** In one embodiment, the instructions cause automotive controller **114** to be flashed with the updated firmware when the firmware is selected to be updated. Additionally, parameters can be changed beyond what was included with the updated firmware. The updated firmware may be the latest default firmware from the vehicle manufacturer that does not have every parameter tuned for the specific configuration of the vehicle. In one embodiment, the reprogramming instructions of local device **112** first reflashes automotive controller **114** with the updated firmware and then updates specific engine tuning parameters.

At step **437,** automotive controller **114** updates the firmware and parameters to the values received from local device **112.**

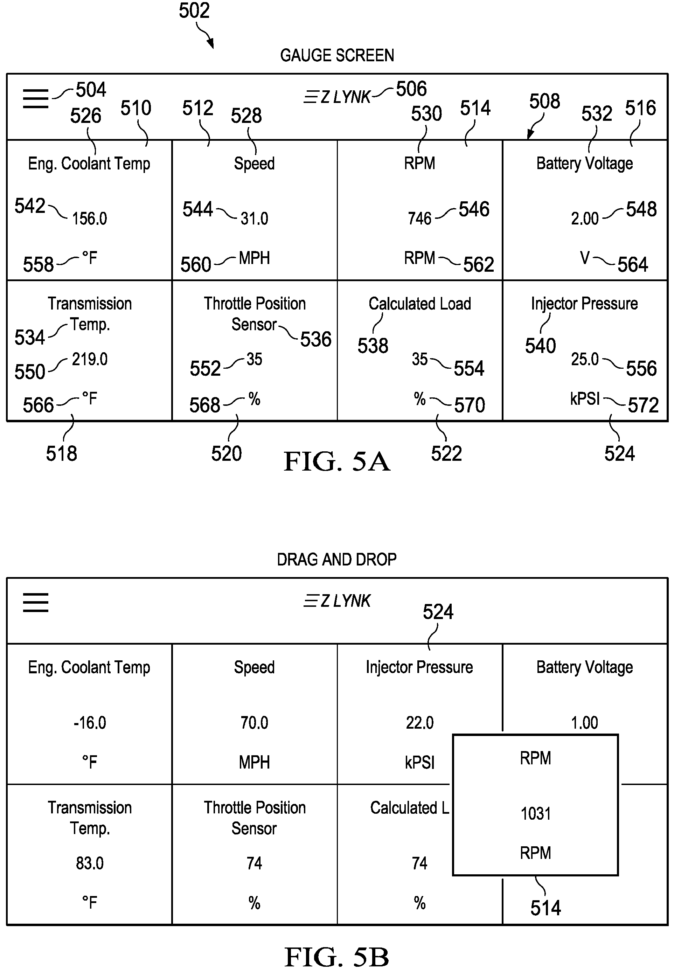

Referring to Figures 5A and 5B, user interface **502** includes menu button **504** on title bar **506,** which is above multiple gauge view **508.** Multiple gauge view **508** includes eight (8) mini gauge views **510, 512, 514, 516, 518, 520, 522,** and **524.**

User interface **502** is displayed on a client device via an app running on the client device. The name, value, and units of each respective mini gauge **510, 512, 514, 516, 518, 520, 522,** and **524** are displayed on user interface **502** on a client device. Values **542, 544, 546, 548, 550, 552, 554,** and **556** respectively of each mini gauge **510, 512, 514, 516, 518, 520, 522,** and **524** are continuously updated as new PID values are received from the automotive controller. In the embodiment of Figure 5A, ten (10) PIDs are named with the units indicated in the table below. PID values, names, and units may be different for different vehicles and the table below is merely one example

| PID | Mini Gauge View | Name | Units |
|---|---|---|---|
| 0 | **510** | Engine Coolant Temperature | Degrees Fahrenheit (°F) |
| 1 | **512** | Speed | Miles per Hour (MPH) |
| 2 | **530** | Revolutions per Minute | Revolutions per Minute (RPM) |
| 3 | **532** | Battery Voltage | Voltage (V) |
| 4 | **518** | Transmission Temperature | Degrees Fahrenheit (°F) |
| 5 | (not shown) | Boost | Pounds per Square Inch (PSI) |
| 6 | **522** | Calculated Load | Percent of Max (%) |
| 7 | **524** | Injector Pressure | Thousand Pounds per Square Inch (kPSI) |
| 8 | (not shown) | Injector Pulse Width | Milliseconds (ms) |
| 9 | **520** | Throttle Position Sensor | Percent of Max (%) |

Mini gauge view **510** includes name **526,** value **542,** and units **558** and is associated with a PID. Name **526** indicates that mini gauge **510** displays the engine coolant temperature, which value **542** indicates is at **156**.0, which units **558** indicates are in degrees Fahrenheit. Mini gauge view **510** is shaded in a green color to indicate that value **542** is within a desired range for the engine coolant temperature.

Mini gauge view **512** includes name **528,** value **544,** and units **560** and is associated with a PID. Name **528** indicates that mini gauge **512** displays the speed, which value **544** indicates is at 31.0, which units **560** indicates are in miles per hour. Mini gauge view **512** is not shaded green, which would indicate that value **544** is in a desired range, and is not shaded red, which would indicate that value **544** is in a warning range.

Mini gauge view **514** includes name **530,** value **546,** and units **562** and is associated with a PID. Name **530** indicates that mini gauge **514** displays the revolutions per minute (RPM) of the engine, which value **546** indicates is at 31.0, which units **562** indicates are in revolutions per minute. Mini gauge view **514** is not shaded green, which would indicate that value **546** is in a desired range, and is not shaded red, which would indicate that value **546** is in a warning range.

Mini gauge view **516** includes name **532,** value **548,** and units **564** and is associated with a PID. Name **532** indicates that mini gauge **516** displays the battery voltage of the engine, which value **548** indicates is at 2.00, which units **564** indicates are in Volts (V). Mini gauge view **516** is shaded red to indicate that value **548** is within a warning range for the battery voltage.

Mini gauge view **518** includes name **534,** value **550,** and units **566** and is associated with a PID. Name **534** indicates that mini gauge **518** displays the transmission temperature of the engine, which value **550** indicates is at **219**.0, which units **566** indicates are in degrees Fahrenheit. Mini gauge view **518** is shaded red to indicate that value **550** is within a warning range for the transmission temperature.

Mini gauge view **520** includes name **536,** value **552,** and units **568** and is associated with a PID. Name **536** indicates that mini gauge **520** displays the throttle position sensor, which value **552** indicates is at 35, which units **568** indicates is a percentage value. Mini gauge view **520** is not shaded green, which would indicate that value **552** is in a desired range, and is not shaded red, which would indicate that value **552** is in a warning range.

Mini gauge view **522** includes name **538,** value **554,** and units **570** and is associated with a PID. Name **538** indicates that mini gauge **522** displays the calculated load on the engine, which value **554** indicates is at 35, which units **570** indicates is a percentage value. Mini gauge view **522** is not shaded green, which would indicate that value **554** is in a desired range, and is not shaded red, which would indicate that value **554** is in a warning range.

Mini gauge view **524** includes name **540,** value **556,** and units **572** and is associated with a PID. Name **540** indicates that mini gauge **524** displays the injector pressure of the engine, which value **556** indicates is at 25.0, which units **572** indicates is in thousand pounds per square inch (kPSI). Mini gauge view **524** is shaded green to indicate that value **556** is in a desired range.

Figure 5B shows a drag and drop operation used to swap the location of two mini gauges on multiple gauge view **508.** The location of mini gauge **514** is swapped with the location of mini gauge **524** within multiple gauge view **508** by dragging mini gauge **514** from its original location towards the original location of mini gauge **524.**

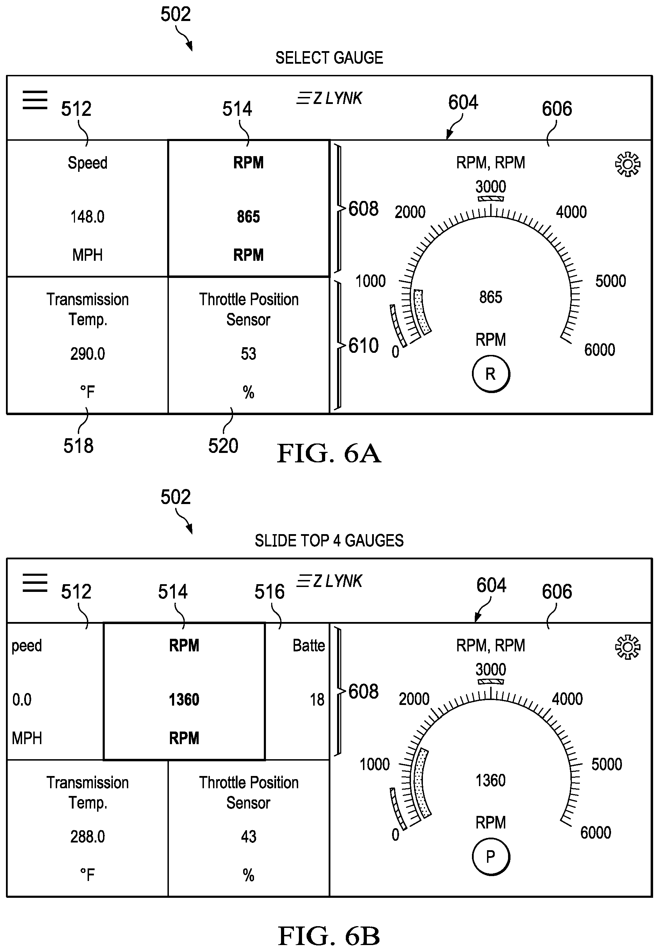

Referring to Figure 6A, user interface **502** is updated to display multiple gauge view **604.** Multiple gauge view **604** includes four (4) mini gauge views **(512, 530, 518,** and **520)** and one selected gauge view **606.** Mini gauge **530** is updated to have its display be highlighted to indicate that gauge **530** is associated with, and has the same PID as, selected gauge **606.** User interface **502** transitions from multiple gauge view **508** (eight gauge view **508)** to multiple gauge view **604** (four gauge view **604)** when gauge **530** is selected from multiple gauge view **508** via a touch or click event.

Upper row **608** includes mini gauges **510** and **512.** Lower row **610** includes mini gauges **518** and **520.**

Referring to Figure 6B, upper row **608** is slid or dragged to the left to reveal mini gauge **516.** Any two adjacent mini gauge views **510, 512, 514,** and **516** can be displayed in upper row **608** by sliding or dragging upper row **608** left or right. During a drag or slide event, up to three mini gauge views may be displayed. After the drag or slide event, two mini gauge views are displayed, which need not include the mini gauge that has been selected (which in Figure 6B is mini gauge **512).**

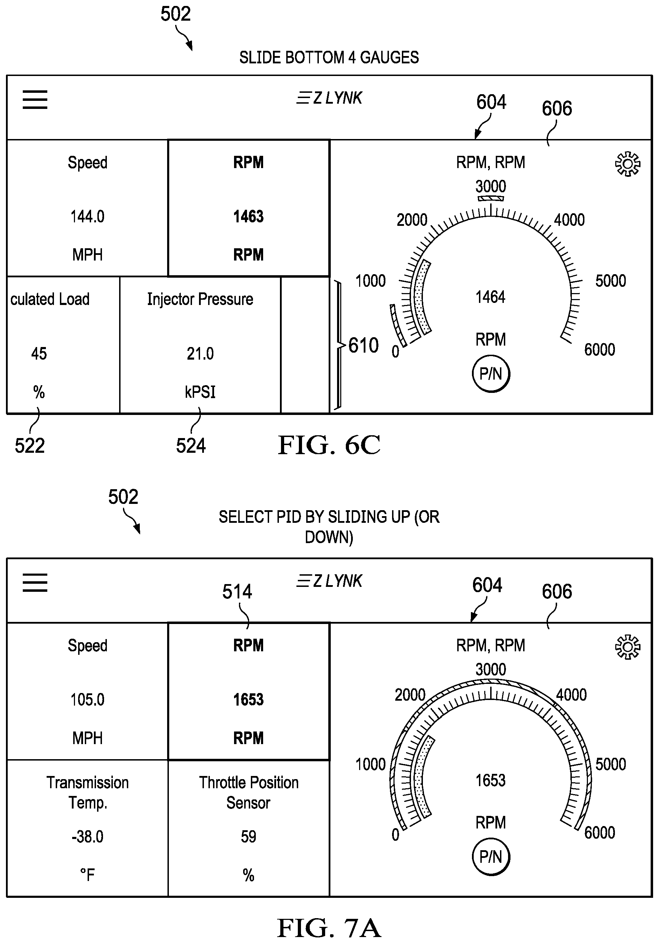

Referring to Figure 6C, lower row **610** is slid or dragged to the left. Any two adjacent mini gauge views **518, 520, 522,** and **524** can be displayed in lower row **610** by sliding or dragging lower row **610** left or right. During a drag or slide event, up to three mini gauge views may be displayed. After the drag or slide event, two mini gauge views are displayed, which need not include the mini gauge that has been selected.

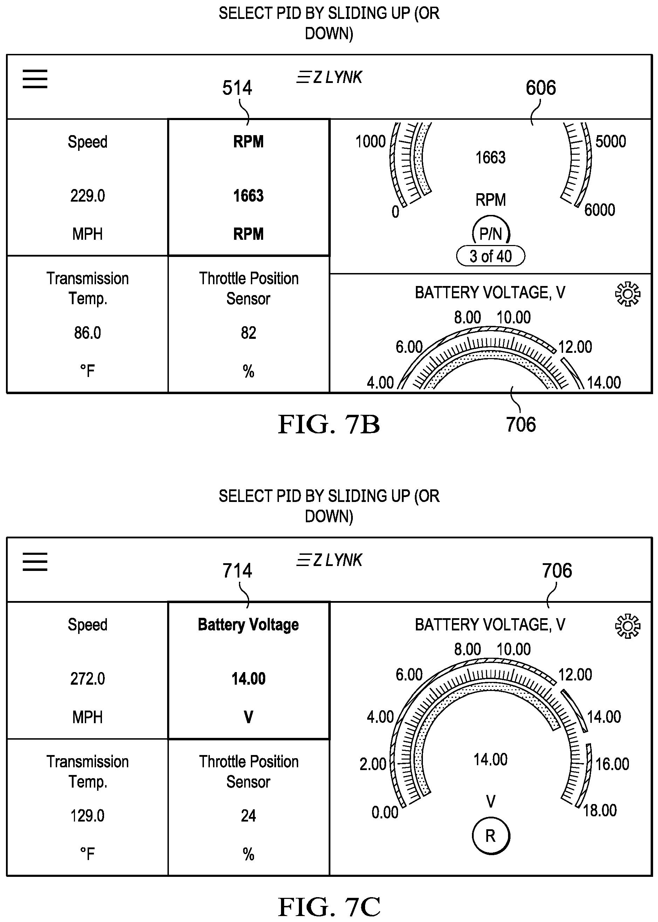

Referring to Figure 7A, 7B, and 7C, user interface **502** is manipulated to change the PID of mini gauge view **530.**

At Figure 7A, multiple gauge view **604** is displayed on user interface **502.** Mini gauge view **530** has been selected and selected gauge view **606** is shown on user interface **502.**

At Figure 7B, selected gauge view is slid or dragged up to reveal second selected gauge view **706.**

At Figure 7C, mini gauge view **512** is updated to become mini gauge view **712.** In on embodiment, mini gauge view **712** duplicates the information from mini gauge view **532** so that when mini gauge view **712** is unselected and user interface **502** transitions back to multiple gauge view **508,** both mini gauge view **532** and mini gauge view **712** are displayed and both show the battery voltage.

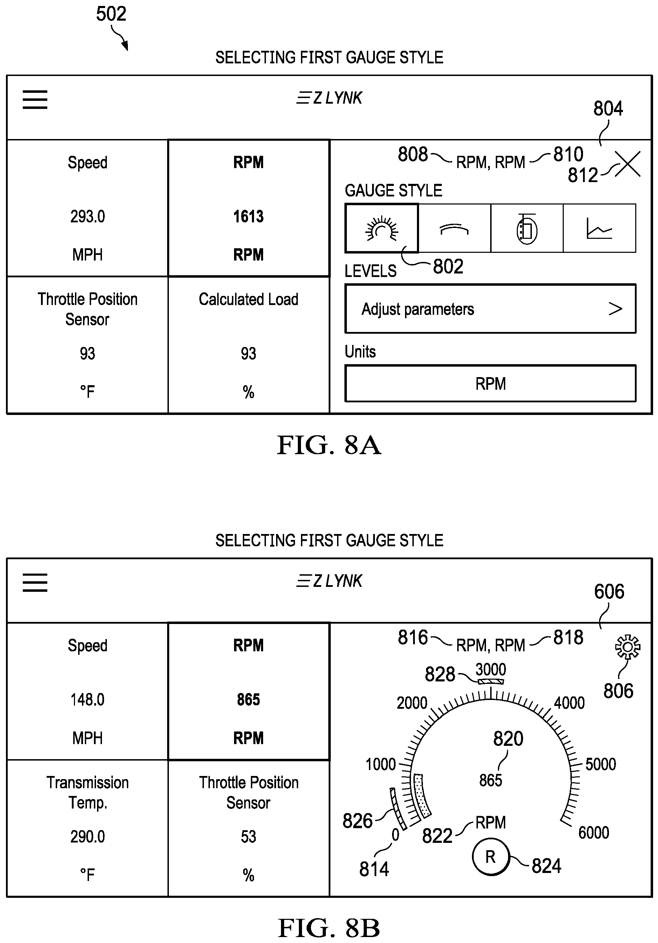

Referring to Figures 8A and 8B, circular gauge style **802** from settings view **804** is selected for selected gauge view **606.** Settings view **802** of Figure 8A is displayed after user interface element **806** is selected from selected gauge view **606** of Figure 8B.

Settings view **804** includes name **808** and units **810** that identify the name and units of the PID that is associated with selected view **606.** Settings view **804** includes user interface element **812** that, when selected, transitions user interface **502** from displaying settings view **804** (Figure 8A) to displaying settings view **606** (Figure 8B). With the selection of circular gauge style **802,** circular gauge view **814** will be shown on selected gauge **606.**

On selected gauge view **606,** name **816** and units **818** that identify the name and units of the PID that is associated with selected view **606.** Value **820** indicates the current value of the PID associated with selected gauge view **606.** Units **822** indicates the current value of the PID associated with selected gauge view **606.** User interface element **824** indicates what gear is being reported by the automotive controller as the current gear of the vehicle.

Circular gauge view **814** includes warning section **824.** In one embodiment, warning section **824** is shaded in red and indicates that the RPM level is too low.

Circular gauge view **814** includes desired section **826.** In one embodiment, desired section **826** is shaded in green and indicates that the RPM level is in a desired operating range for the vehicle.

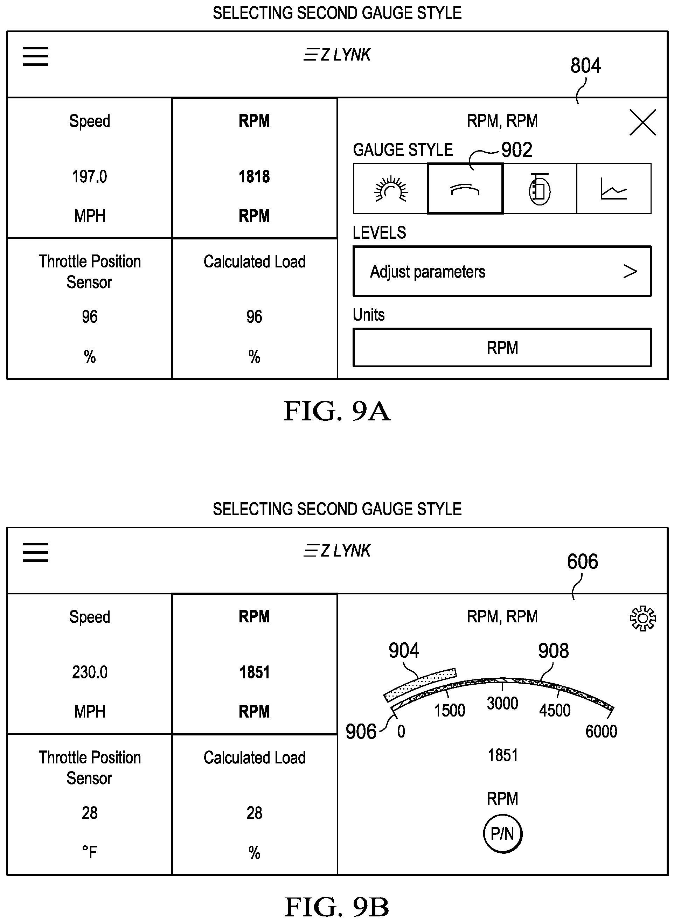

Referring to Figures 9A and 9B, arc gauge style **902** from settings view **804** is selected for gauge view **606.** When arc gauge style **902** is selected, selected gauge view **606** shows arc gauge view **904.** Arc gauge view **904** includes warning section **906.** In one embodiment, warning section **906** is shaded in red and indicates that PID values that are within warning section **906** are too low.

Arc gauge view **904** includes desired section **908.** In one embodiment, desired section **908** is shaded in green and indicates that PID values that are within desired section **908** are in a preferred range for one of maximum torque or horsepower.

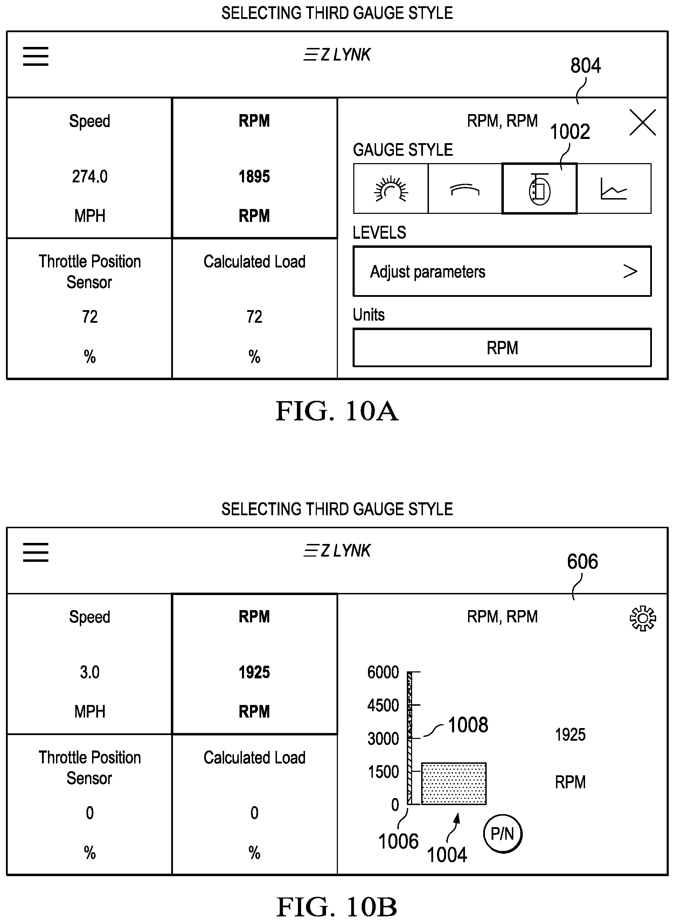

Referring to Figures 10A and 10B, bar gauge style **1002** from settings view **804** is selected for gauge view **606.** When bar gauge style **1002** is selected, selected gauge view **606** shows bar gauge view **1004.** Bar gauge view **1004** includes warning section **1006.** In one embodiment, warning section **1006** is shaded in red and indicates that PID values that are within warning section **1006** are too low.

Bar gauge view **1004** includes desired section **1008.** In one embodiment, desired section **1008** is shaded in green and indicates that PID values that are within desired section **1008** are in a preferred range for one of maximum torque or horsepower.

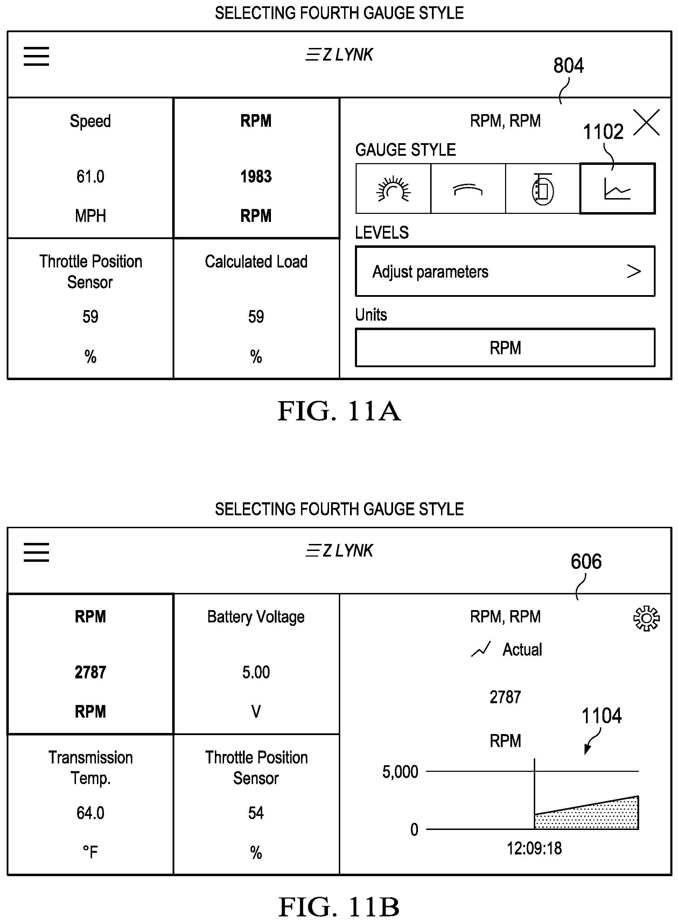

Referring to Figures 11A and 11B, line history gauge style **1102** from settings view **804** is selected for gauge view **606.** When line history gauge style **1102** is selected, selected gauge view **606** shows line history gauge view **1104.** Line history gauge view **1104** is a graph that shows recent values for the selected gauge as a function of time. The recent values are stored on the client device. Line history gauge view **1104** shows the most recent data on the right-hand-side of the chart.

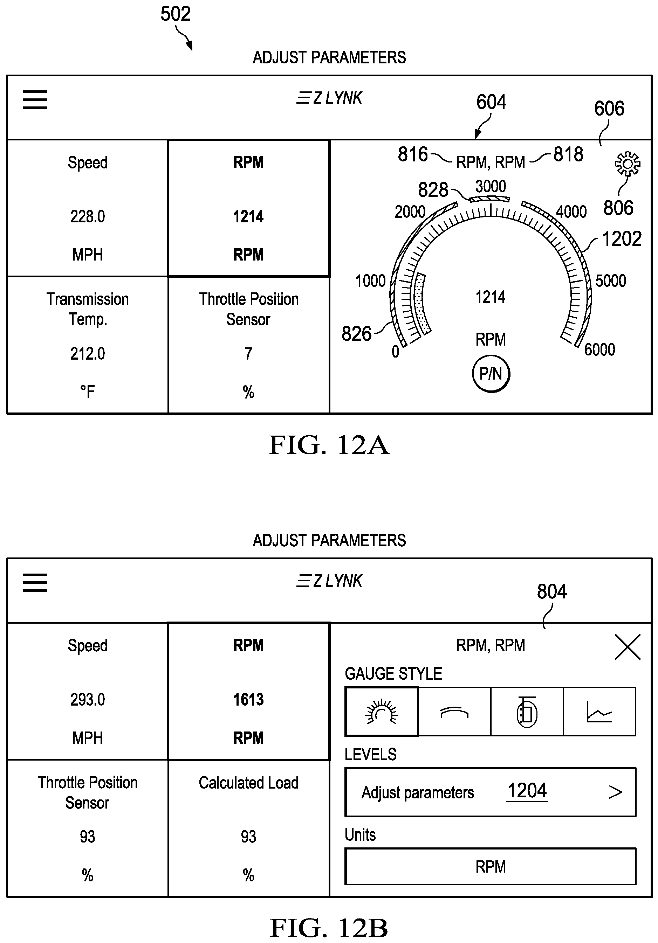

Referring to Figures 12A through 12I, user interface **502** comprises multiple gauge view **604** with selected gauge view **606.** Selected gauge view **606** includes warning section **824,** desired section **826,** and warning section **1202** that are each adjustable. Warning section **824** identifies when the PID value is too low and warning section **1202** identifies when the PID value is too high.

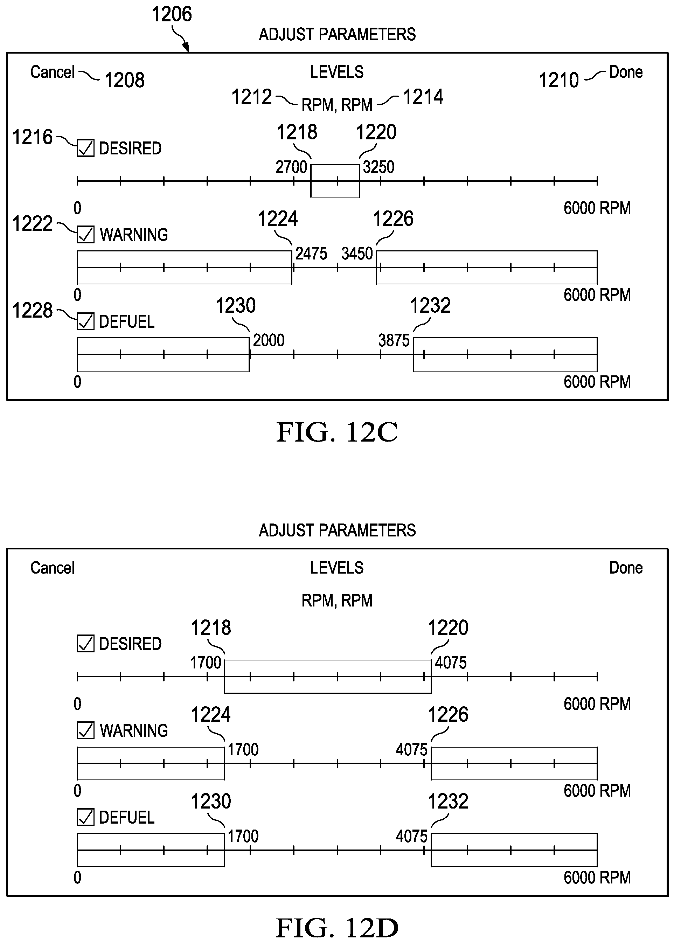

To adjust the settings for warning section **824,** desired section **826,** and warning section **1202,** user interface element **806** is selected to display settings view **804** (Figure 12B) and then user interface element **1204** is selected from settings view **804** to display view **1206** (Figure 12C) on user interface **502.** View **1206** is also referred to as parameter adjustment view **1206.**

Parameter adjustment view **1206** includes user interface element **1208,** user interface element **1210,** name **1212,** and units **1214**

User interface element **1208** is a cancel button that, when selected, undoes changes that were made in parameter adjustment view **1206.** After selecting user interface element **1208,** user interface **502** returns to multiple gauge view **604** with settings view **804,** as in Figure 12B.

User interface element **1210** is a button that, when selected, accepts changes that were made in parameter adjustment view **1206.** After selecting user interface element **1210,** user interface **502** returns to multiple gauge view **604** with settings view **804,** as in Figure 12B.

Name **1212** and units **1214** identify the type and units of the PID information that is displayed on view **1206.** In one embodiment, name **1212** is revolutions per minute (RPM) and units **1214** are RPM.

User interface element **1216** is a checkbox that indicates whether desired section **826** is shown on selected gauge view **606.** The range of desired section **826** is controlled by the range between minimum desired threshold **1218** and maximum desired threshold **1220.** When the PID value is between minimum desired threshold **1218** and maximum desired threshold **1220,** then the PID value is in a desired or preferred range.

The display of warning section **824** and warning section **1202** are controlled by user interface element **1222.** The range of the gap between warning section **824** and warning section **1202** is controlled by the range between minimum warning threshold **1224** and maximum warning threshold **1226.** When the PID value is below minimum desired threshold **1224** or above maximum desired threshold **1226,** then the PID value is in a warning range that could lead to engine fault, damage, or failure.

User interface element **1228** identifies whether the defuel settings are active. When the PID value is below minimum defuel threshold **1224** or above maximum defuel threshold **1226,** then the PID value is in a defuel range where the fuel supply to the engine will reduced in order to protect the engine.

In one embodiment, the relationships shown below are maintained by the thresholds displayed on parameter adjustment view **1206.**

$$\text{minimum defuel threshold } \mathbf{1230} \leq \text{minimum warning threshold } \mathbf{1224} \qquad \text{Rel.1}$$

$$\text{minimum warning threshold } \mathbf{1224} \leq \text{minimum desired threshold } \mathbf{1218} \qquad \text{Rel.2}$$

$$\text{minimum desired threshold } \mathbf{1218} \leq \text{maximum desired threshold } \mathbf{1220} \qquad \text{Rel.3}$$

$$\text{maximum desired threshold } \mathbf{1220} \leq \text{maximum warning threshold } \mathbf{1226} \qquad \text{Rel.4}$$

$$\text{maximum warning threshold } \mathbf{1226} \leq \text{maximum defuel threshold } \mathbf{1232} \qquad \text{Rel.5}$$

Referring to Figure 12D, when minimum desired threshold **1218** is dragged to the left, minimum warning threshold **1224** and minimum defuel threshold **1230** may also move to the left so that both minimum warning threshold **1224** and minimum defuel threshold **1230** remain less than or equal to minimum desired threshold **1218.**

When maximum desired threshold **1220** is dragged to the right, maximum warning threshold **1226** and maximum defuel threshold **1232** may also move to the right so that both maximum warning threshold **1226** and maximum defuel threshold **1232** remain greater than or equal to maximum desired threshold **1220.**

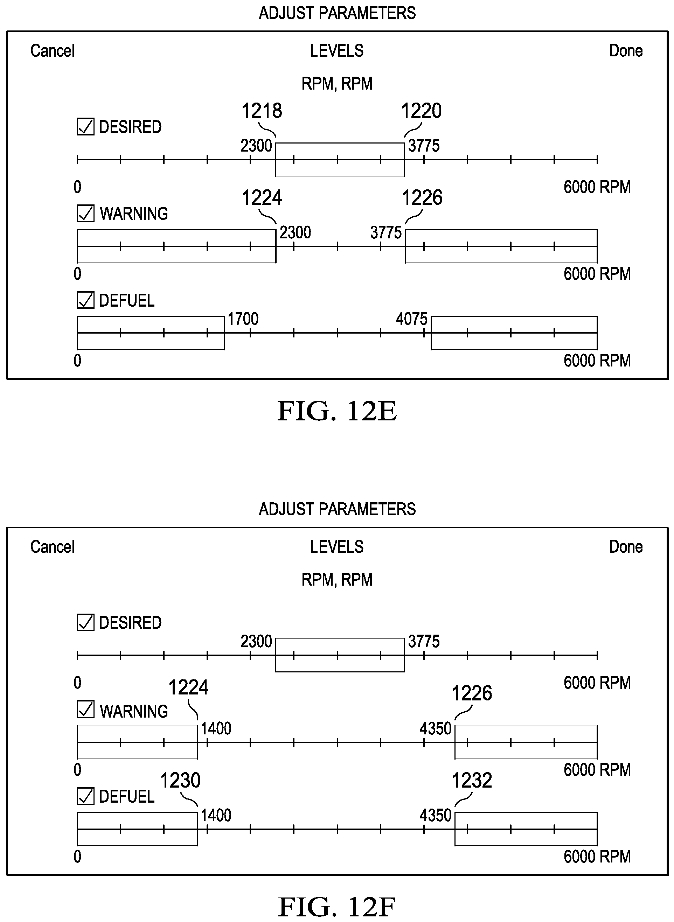

Referring to Figure 12E, when minimum warning threshold **1224** is dragged to the right , minimum desired threshold **1218** may also move to the right so that minimum desired threshold **1218** remains greater than or equal to minimum warning threshold **1224.**

When maximum warning threshold **1226** is dragged to the left, maximum desired threshold **1220** may also move to the left so that maximum desired threshold **1220** remains less than or equal to maximum warning threshold **1226.**

Referring to Figure 12F, when minimum warning threshold **1224** is dragged to the left, minimum defuel threshold **1230** may also move to the left so that minimum defuel threshold **1230** remains less than or equal to minimum warning threshold **1224.**

When maximum warning threshold **1226** is dragged to the right, maximum defuel threshold **1232** may also move to the right so that maximum defuel threshold **1232** remains greater than or equal to maximum warning threshold **1226.**

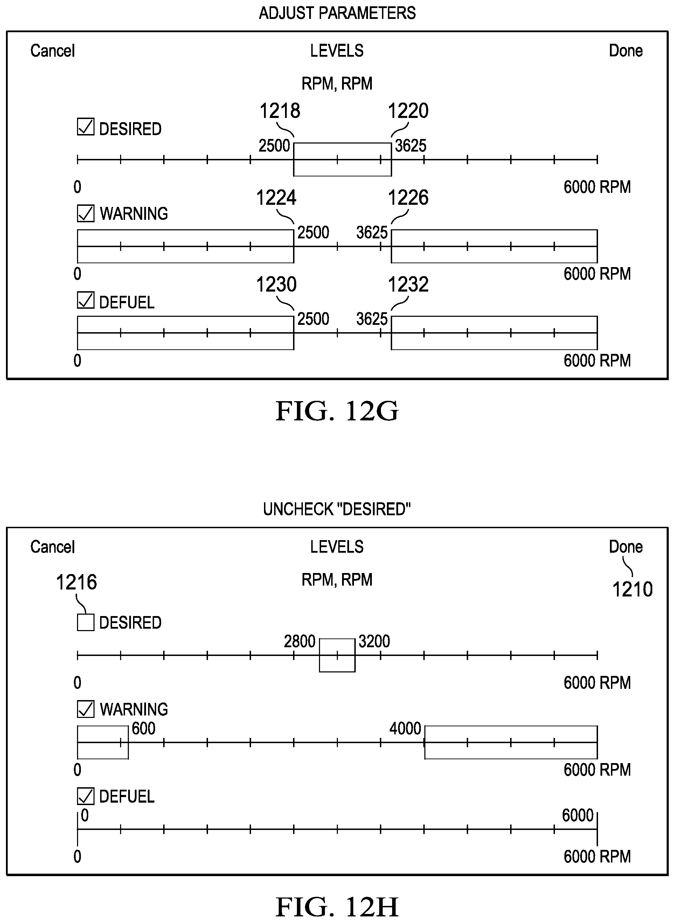

Referring to Figure 12G, when minimum defuel threshold **1230** is dragged to the right, minimum warning threshold **1224** and minimum desired threshold **1218** may also move to the right so that both minimum warning threshold **1224** and minimum desired threshold **1218** remain greater than or equal to minimum defuel threshold **1230.**

When maximum defuel threshold **1232** is dragged to the left, maximum warning threshold **1226** and maximum desired threshold **1220** may also move to the left so that both maximum warning threshold **1226** and maximum desired threshold **1220** remain less than or equal to maximum defuel threshold **1232.**

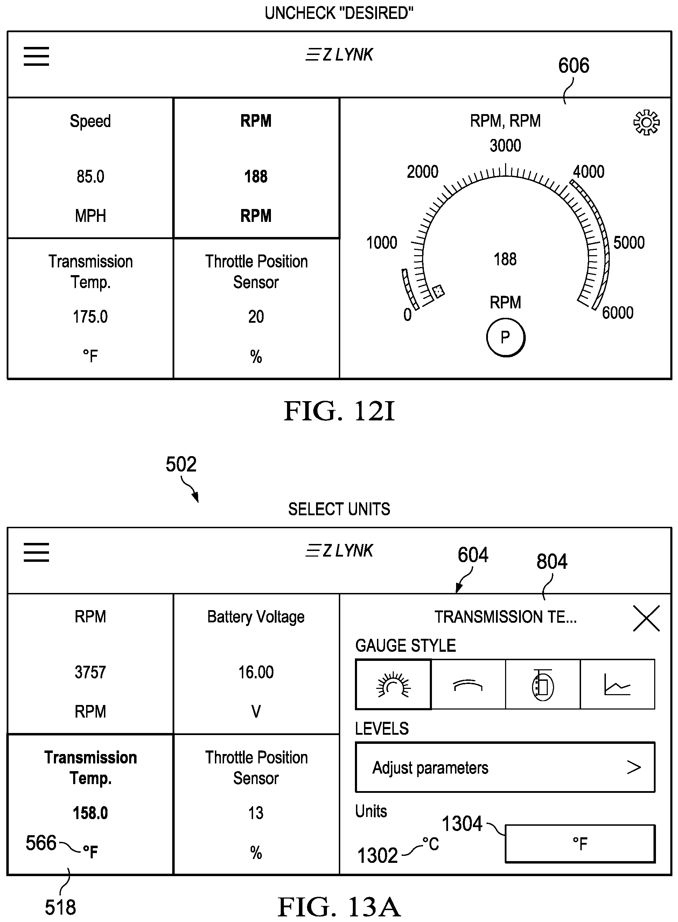

Referring to Figures 12H and 12I, when user interface element (checkbox) **1216** is unselected and user interface element (done button) **1210** is selected, then the desired section is not displayed on the selected gauge view **606,** as shown in Figure 12I.

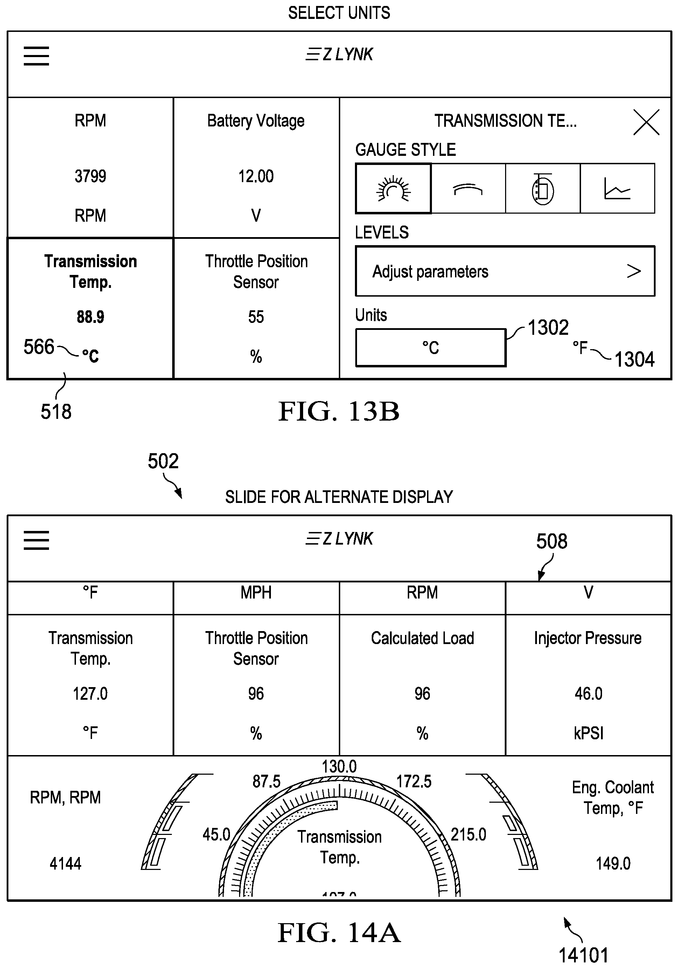

Referring to Figures 13A and 13B, user interface **502** displays multiple gauge view **604,** mini gauge **518** has been selected, and settings view **804** is displayed. Settings view **804** includes user interface element **1302** and user interface element **1304.**

User interface element **1302** and user interface element **1304** allow for the selection between different units for the PID values associated with mini gauge **518.** In one embodiment, mini gauge **518** is associated with transmission temperature and can be displayed in degrees Celsius (°C) upon the selection of user interface element **1302** or in degrees Fahrenheit (°F) upon the selection of user interface element **1304.**

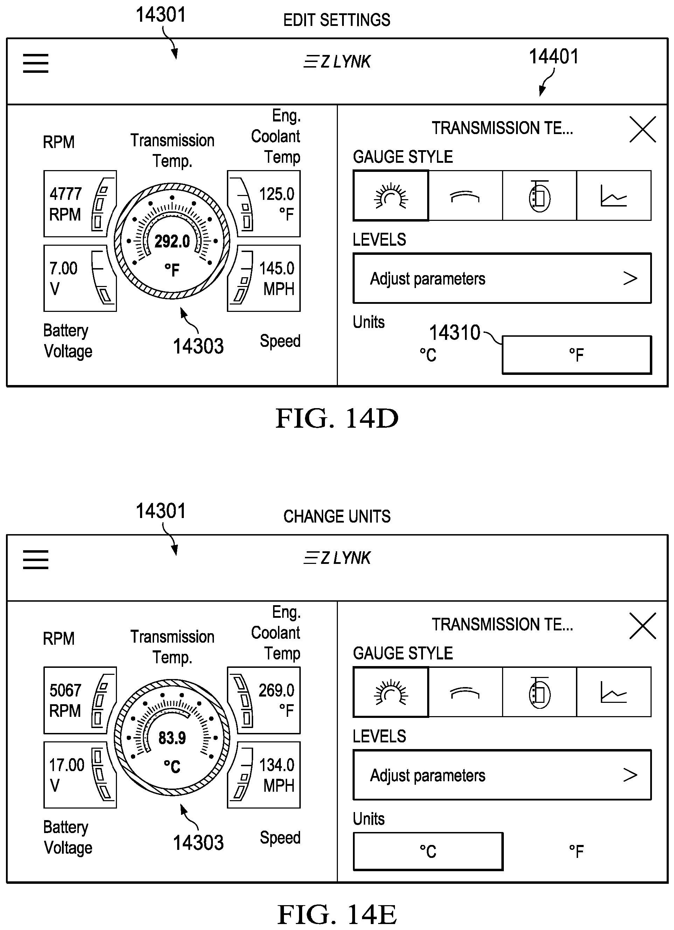

Referring to Figures 14A through 14E, user interface **502** transitions from multiple (eight) gauge view **508** to multiple gauge view **1401.** Multiple gauge view **1401** may also be referred to as five gauge view **1401.** The transition from eight gauge view **508** to five gauge view **1401** occurs when there is a slide or drag event that drags eight gauge view **508** up to reveal five gauge view **1401.** Additionally, the transition from five gauge view **1401** to eight gauge view **508** occurs when there is a slide or drag event that drags five gauge view **1401** down to reveal eight gauge view **508.**

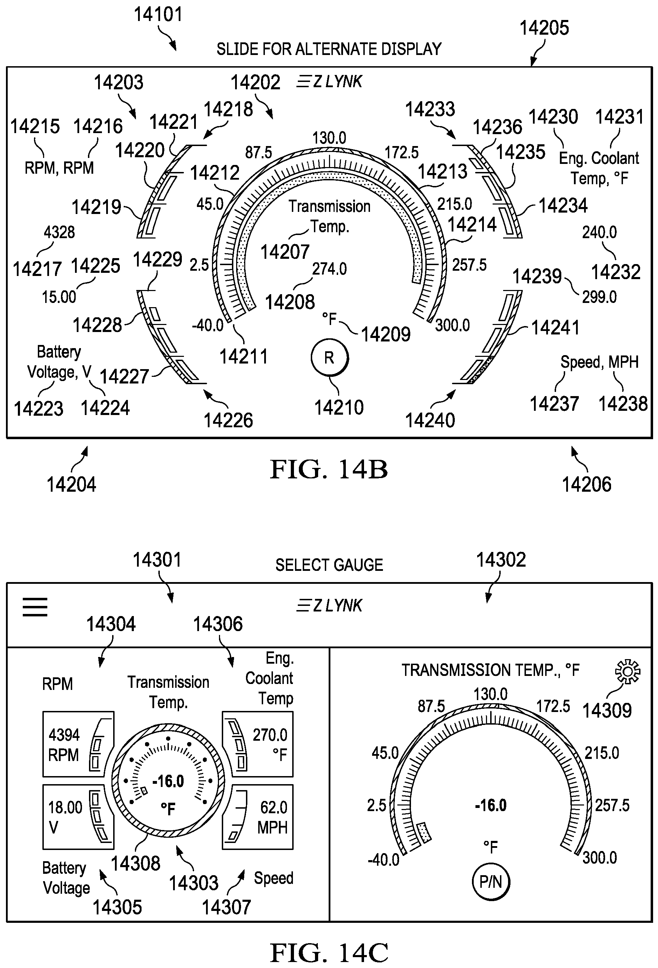

Referring to figure 14B, five gauge view **14101** includes gauge views **14202, 14203, 14204, 14205,** and **14206,** which may be referred to as large center gauge view **14202,** top left gauge view **14203,** bottom left gauge view **14204,** top right gauge view **14205,** and bottom left gauge view **14206.**

Large center gauge view **14204** includes name **14207,** value **14208,** units **14209,** gear **14210,** and circular gauge view **14211.** Circular gauge view **14211** includes lower warning section **14212,** desired section **14213,** and upper warning section **14214.** Large center gauge view **14204** indicates that the vehicle is in reverse and that the transmission temperature is 274.0 °F and is in a warning range that is above the desired range.

Top left gauge view **14203** includes name **14215,** units **14216,** value **14217,** and arc gauge view **14218.** Arc gauge view **14218** includes lower warning section **14219,** desired section **14220,** and upper warning section **14221.** Top left gauge view **14203** indicates that the RPM of the motor is 4328 RPM, which is just above the desired range an in the upper warning range.

Bottom left gauge view **14204** includes name **14223,** units **14224,** value **14225,** and arc gauge view **14226.** Arc gauge view **14226** includes lower warning section **14227,** desired section **14228,** and upper warning section **14229.** Bottom left gauge **14204** indicates that the battery voltage is 15.00 V and is in the upper warning range.

Top right gauge view **14205** includes name **14230,** units **14231,** value **14232,** and arc gauge view **14233.** Arc gauge view **14233** includes lower warning section **14234,** desired section **14235,** and upper section **14236.** Top right gauge **14205** indicates that the engine coolant temperature is 240.0 °F and is in the upper warning section above the desired level.

Bottom right gauge view **14206** includes name **14237,** units **14238,** value **14239,** and arc gauge view **14240.** Arc gauge view **14240** includes warning section **14241** that indicates which values are too high. Bottom right gauge **14206** indicates that the speed of the vehicle is 299.0 MPH and is in the upper warning range.

The names, units, and values displayed on the gauges in large five gauge view **14101** are each shaded in red to indicate that each of the values of each of the gauges is in a warning section

When any one of gauge views **14202, 14203, 14204, 14205,** and **14206** are selected from large five gauge view **14101,** user interface **502** transitions from displaying large five gauge view **14101** to multiple gauge view **14301** and selected gauge view **14302,** shown in Figure 14C. Multiple gauge view **14301** may also be referred to as small five gauge view **14301.**

Referring to Figure 14C, small five gauge view **14301** includes gauge views **14303, 14304, 14305, 14306,** and **14307,** which may be referred to as small center gauge view **14303,** top left gauge view **14304,** bottom left gauge view **14305,** top right gauge view **14306** and bottom right gauge view **14307.** Gauge views **14303, 14304, 14305, 14306,** and **14307** from small five gauge view **14301** are associated with the same PIDs as gauge views **14202, 14203, 14204, 14205,** and **14206** from large five gauge view **14101** of Figure 14B respectively. The values for gauge views **14303, 14304, 14305, 14306,** and **14307** are continuously updated to reflect the current state of the engine.

Selected gauge view **14302** of Figure 14C is similar to selected gauge view **606** of Figure 6 and is associated with small center gauge **14303.** Small center gauge view **14303** includes outline **14308** to indicate that small center gauge view **14303** is the gauge view that is linked to or associated with selected gauge view **14302** and that large center gauge view **14202** may have been selected from multiple gauge view **14101** of Figure 14B.

When user interface element **14309** of Figure 14C is selected, user interface **502** transitions from displaying selected gauge view **14302** of Figure 14C to displaying settings view **14401** of Figure 14D. Settings view **14401** of Figure 14D is similar to settings view **804** of Figure 8.

Referring to Figure 14D, degrees Fahrenheit (°F) were originally selected and displayed on small center gauge view **14303.** Upon selection of user interface element **14310,** degrees Celsius (°C) are selected and displayed on small center gauge view **14303.**

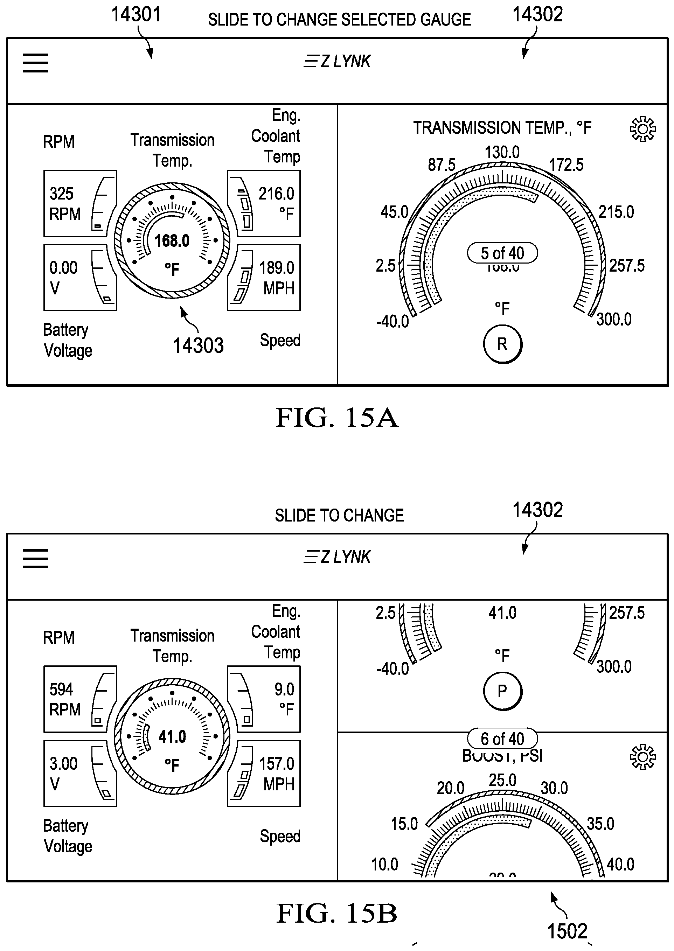

Referring to Figures 15A to 15D, when selected gauge view **14302** is slid or dragged up, second selected gauge view **1502** is revealed. Additionally, small center gauge view **14303** that is associated with transmission temperature is updated to second small center gauge view **1504.** Second small center gauge view **1504** is a Boost value that is 29.0 pounds per square inch (PSI).

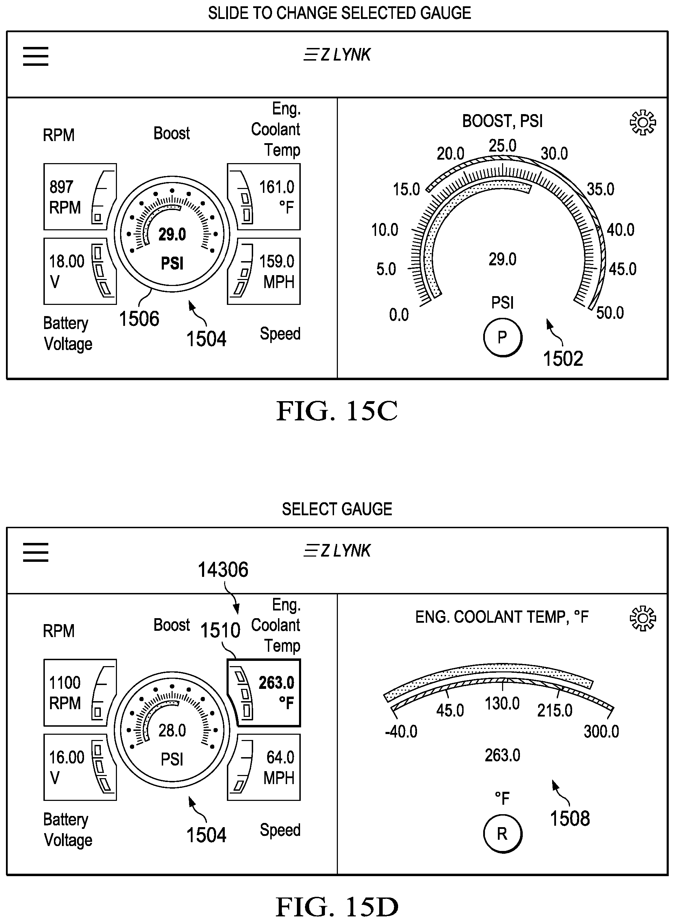

Upon selection of small top right gauge view **14306** in Figure 15D, selected gauge view **1502** of Figure 15C is updated to selected gauge view **1504** of Figure 15D. Selected gauge view **1504** shows the same PID information as small top right gauge view **14306.** Small top right gauge view **14306** is updated to include outline **1510** and outline **1506** around small center gauge view **1504** is removed.

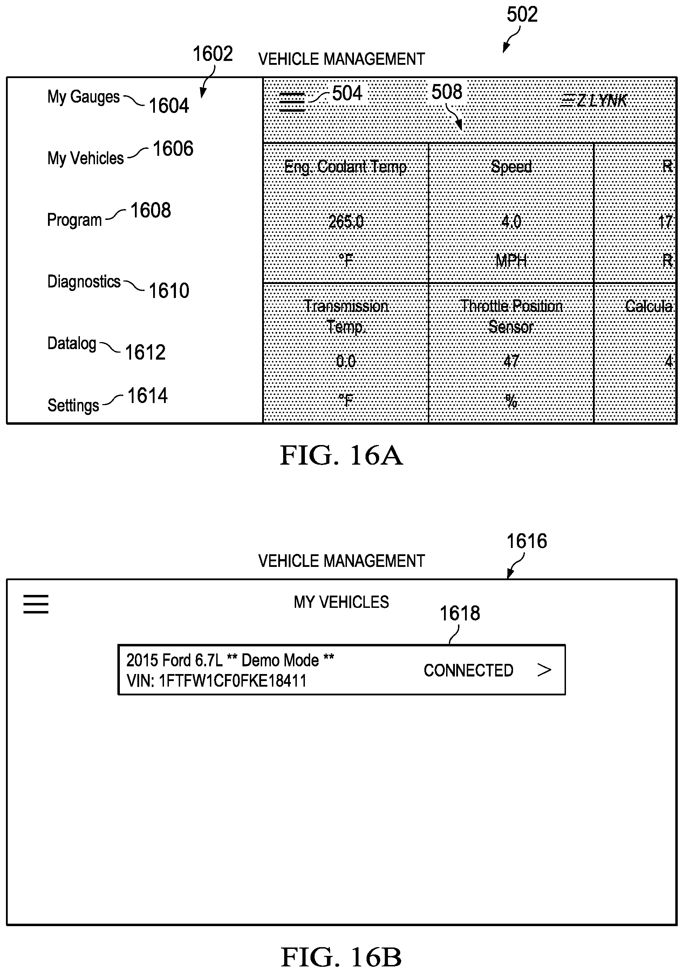

Referring to Figure 16A, menu button **504** is selected. Eight gauge view **508** slides partially to the right and down and is made more transparent to enhance the display of menu **1602.** Menu **1602** includes user interface elements **1604, 1606, 1608, 1010, 1012,** and **1614,** which may also be referred to as "My Gauges" button **1604,** "My Vehicles" button **1606,** "Program" button **1608,** "Diagnostics" button **1610,** "Datalog" button **1612,** and "Settings" button **1614.**

Selecting button **1604** removes menu **1602** and brings back the most recent gauge view, which in Figure 16A is eight gauge view **508.**

Selecting button **1606** removes menu **1602** and transitions user interface **502** to view **1616** of Figure 16B. View **1616** may also be referred to as "My Vehicles" view **1616,** includes a user interface element for each vehicle that has been associated with the client device app. User interface element **1618** includes the year, make, and model of the vehicle and indicates that the local device is attached to the vehicle associated with user interface

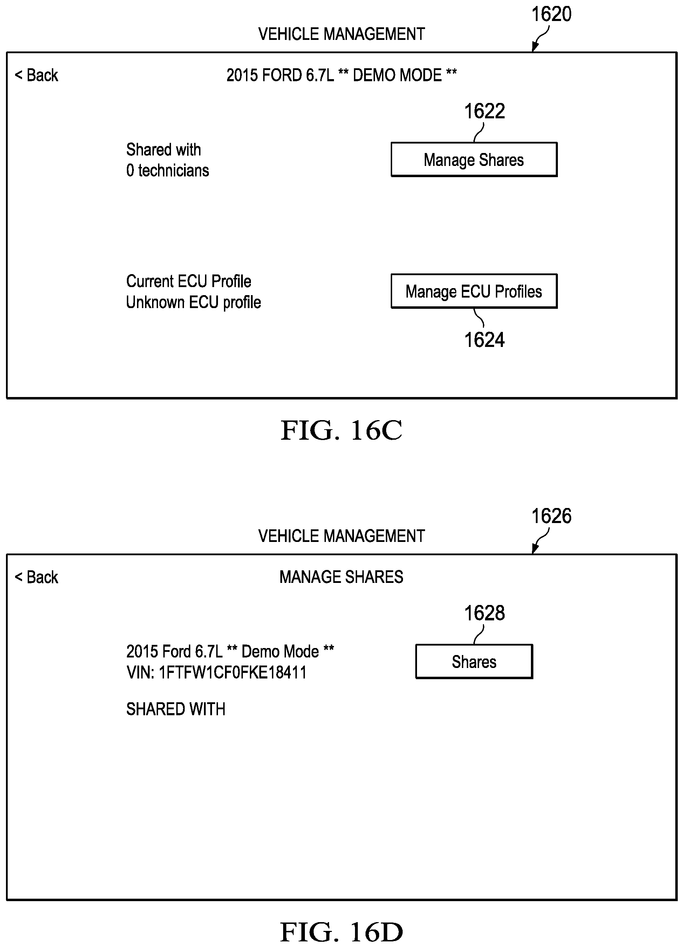

Upon selecting user interface element **1618,** user interface **502** transitions to view **1620** of Figure 16C. View **1620** may also be referred to as vehicle view **1620,** includes user interface elements **1622** and **1624,** identifies the number of technicians to which the vehicle has been shared and identifies the current ECU profile.

Upon selecting user interface element **1622,** user interface **502** transitions to view **1626** of Figure 16D. View **1626** may also be referred to as Manage Shares view **1626,** includes user interface element **1628,** and lists the technicians to which the vehicle has been shared in one or more user interface elements. As shown, in Figure 16D, the vehicle has not been shared with any technicians.

Selecting user interface element **1624** brings up a different view (not shown) that allows for the management of ECU profiles. The management of ECU profiles includes: updating one or more parameters within a profile and deleting a profile from the client device.

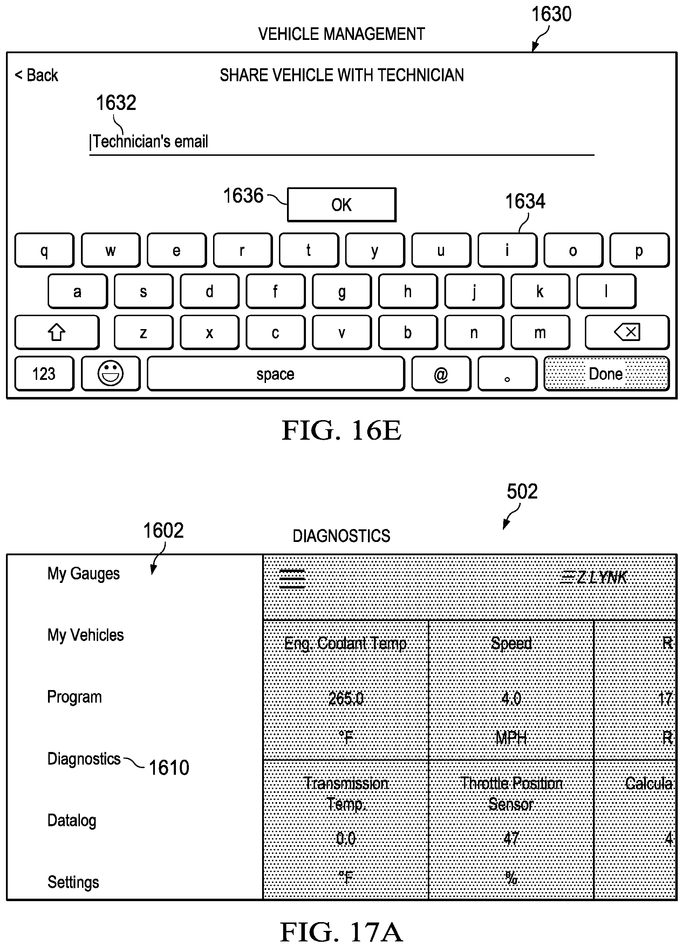

Upon selecting user interface element **1628,** user interface **502** transitions to view **1630** of Figure 16E. View **1630** may also be referred to as Manage Shares view **1630,** includes user interface element **1632,** keyboard **1634,** and user interface element **1636.** User interface element **1632** is an edit box that receives a technician's email address that acts as the login information to access a system server, such as system server **102** of Figure 1.

In one embodiment, view **1630** of user interface **502** is displayed on a client device that is used by a technician that is diagnosing the car to allow the technician to log into the server. Upon selection of the "Done" button on keyboard **1634** or user interface element **1636,** the client device app will attempt to login to the system server and associated (or share) the vehicle with the technician's client device.

In an alternative embodiment, view **1630** of user interface **502** is displayed on a client device that is used by the owner of the vehicle that is being diagnosed. Upon selection of the "Done" button on keyboard **1634** or user interface element **1636,** the client device app will send the technician's email address to the server, which will then allow the technician to log in and will then allow the vehicle information from the ODB2 port of the vehicle to be shared with a second client device that is operated by a technician. Sharing the vehicle information with the technician's client device allow the technician to diagnose the vehicle, even when the vehicle and the technician are remotely located.

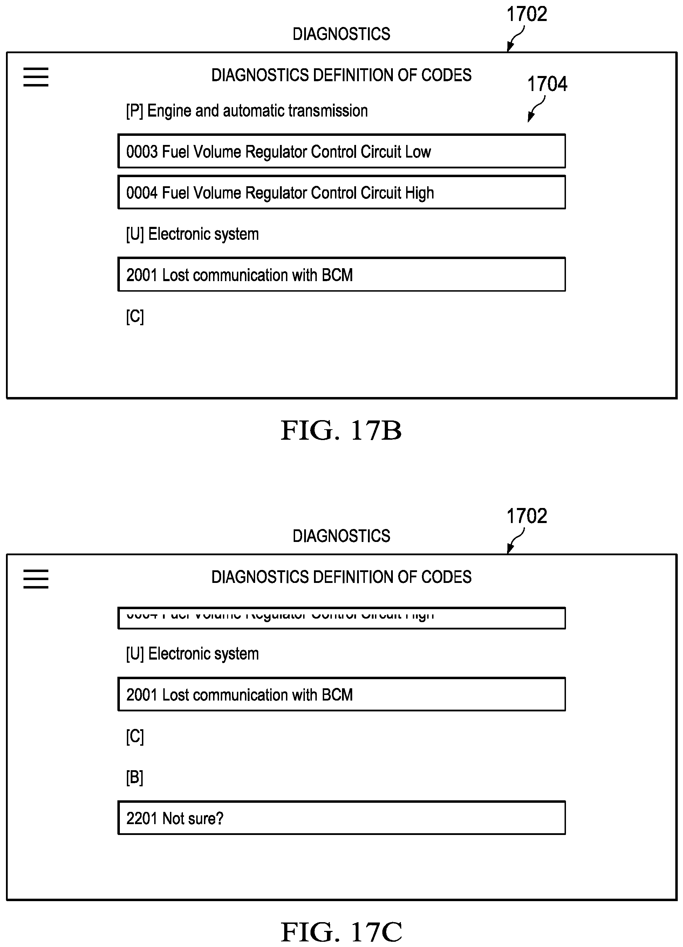

Referring to Figures 17A, 17B, 17C, upon selection of user interface element **1610** from menu **1602,** user interface **502** displays view **1702.** View **1702** may be referred to as diagnostics view **1702** and displays list **1704** of diagnostic codes with a text description of the code. List **1704** is a list that can be scrolled up and down to show more than one page of information. Figure 17B shows the top of list **1704** and Figure 17C shows the bottom of list **1704.**

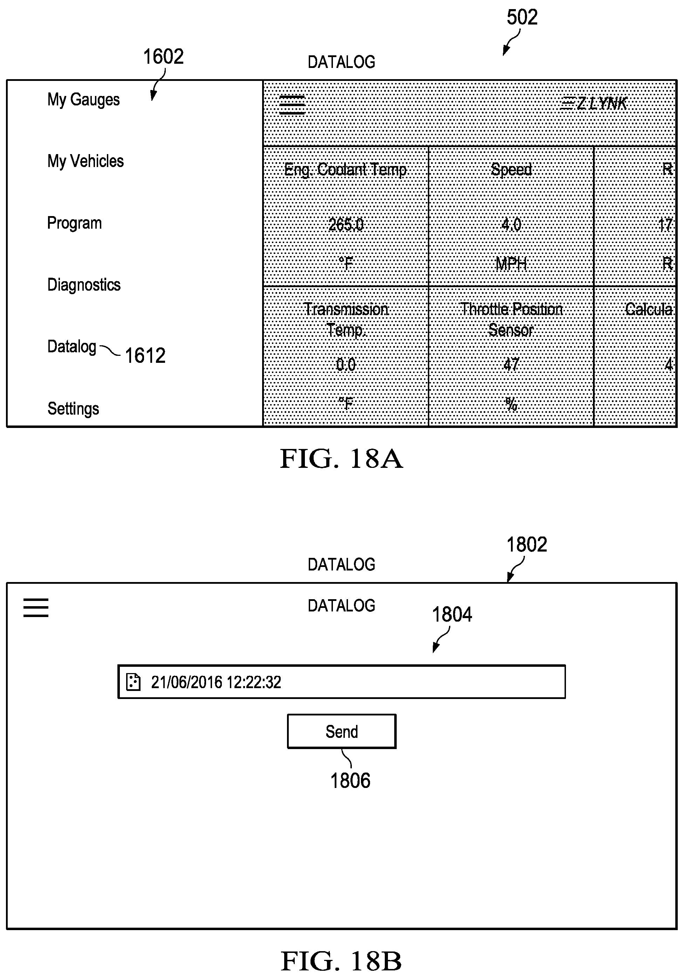

Referring to figures 18A and 18B, upon selection of user interface element **1612** from menu **1602,** user interface **502** displays view **1802.** View **1802,** which may be referred to as "Datalog" view **1802,** displays list **1804** of data logs, below which is user interface element **1806.** List **1804** is a scrollable list that shows the data logs that can be sent to the system server. The data logs store information received by the client device from the local device that the local device received from the automotive controller. Selecting user interface element **1806** sends a data log that has been selected from list **1804** to the system server.

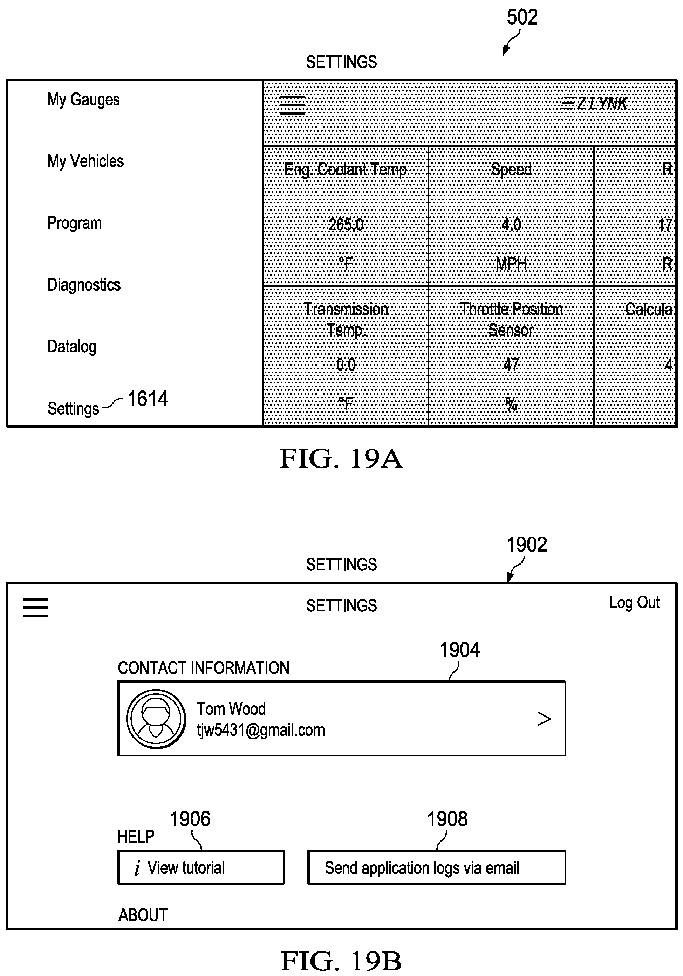

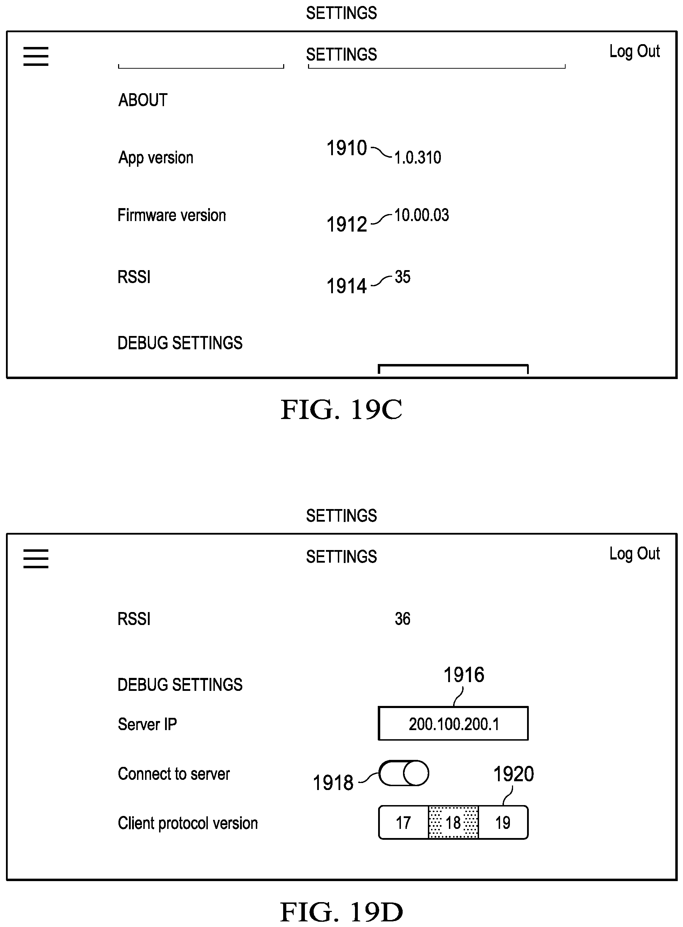

Referring to Figures 19A, 19B, 19C, and 19D, upon selection of user interface element **1614,** user interface **502** displays view **1902.** View **1902,** which may also be referred to as "Settings" view **1902,** displays one or more user interface elements that allow the user of the app to view and control various settings related to the app.

User interface element **1904** displays contact information including a name and an email address. When user interface element **1904** is selected, user interface **502** displays another view (not shown) that allows the user to view and manipulate the contact information, which also includes a phone number and a birthday. The contact information is used by the technician to contact the owner of the vehicle that the local device is connected to.

When selected, user interface element **1906** displays one or more videos that show how to use the client device app.

User interface element **1908** is for the development of the client device application itself. When user interface element **1908** selected, the client device app will send the log of information recorded by the client device app via an email to the contact identified in user interface element **1904.**

User interface element **1910** displays the version of the client device app that is currently running.

User interface element **1912** displays the version of the firmware running on the local device that is currently running.

User interface element **1914** displays a receive signal strength indicator (RSSI) that indicates the strength of the wireless signal that is sent by the local device and received by the client device.

User interface element **1916** is an edit box that contains the internet protocol (IP) address that the client device will use to connect to the server running on the local device.

User interface element **1918** is a binary selector switch that, when enabled, allows the app to connect to the server running on the local device.

User interface element **1920** is a multiple position single selector switch that is used to select which protocol version that the client device app will use to communicate with the server running on the local device.

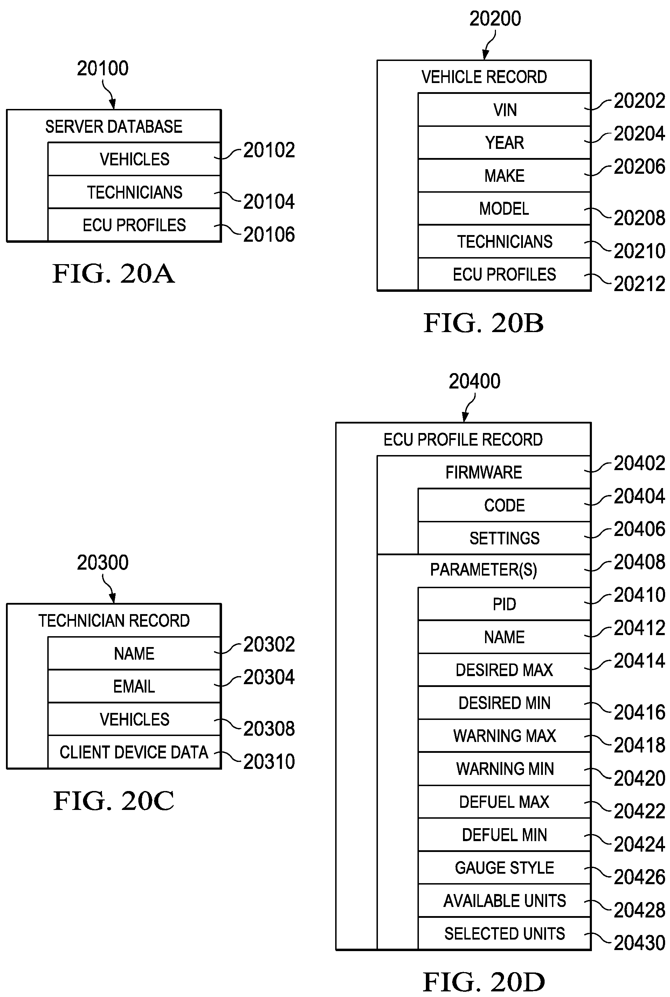

Referring to figure 20A, server database **20100** is an embodiment of database **106** that is accessed by system server **102** of Figure 1. Server database **20100** comprises one or more records, which may themselves be databases. The records can be stored on any device of the system. In one embodiment, server database **20100** includes records for vehicles **20102,** technicians **20104,** and engine control unit (ECU) profiles **20106.**

Vehicles **20102** comprise vehicle records **20200** of Figure 20B that are each associated with a vehicle. Technicians **20104** comprise technician records **20300** that are each associated with a technician. ECU profiles **20106** comprise ECU profile records **20400** that are each associated with an ECU profile.

Referring to Figure 20B, vehicle record **20200** comprises data and information related to a vehicle. Vehicle identification number (VIN) **20202** is a unique that is assigned to the vehicle by the manufacturer of the vehicle in accordance with international standard ISO 3833. Year **20204** is the model year of the vehicle, which in one embodiment is stored as an unsigned integer. Make **20206** identifies the manufacturer of the vehicle, which in one embodiment is stored as a string of characters in accordance with either the American Standard Code for Information Interchange (ASCII) or Unicode. Model **20208** identifies the model of the vehicle, which in one embodiment is stored as a string of characters. Technicians **20210** are links to technician records **20300** for each technician that has been associated with the vehicle. ECU profiles **20212** are links to ECU profile records **20400** for each ECU profile that has been associated with the vehicle.

Referring to Figure 20C, technician record **20300** comprises data and information associated with a technician. Name **20302** is the name of the technician, which in one embodiment is stored as a string of characters. Email **20304** is an email address of the technician that may also serve as a login identifier for the technician and which, in one embodiment, is stored as a string of characters. Vehicles **20308** are links to vehicle records **20200** that are associated with the technician. Client device data **20310** includes data and information about the device that the technician uses to access the system, including: a unique device identifier, operating system (OS) version, client application version, and so on.

Referring to Figure 20D, ECU profile record **20400** comprises data and information associated with an ECU profile. ECU profile record **20400** includes firmware **20402** and parameters **20408.**

Firmware **20402** is the firmware that runs on an automotive controller, such as automotive controller **114** of Figure 1. Firmware **20402** includes code **20404** and settings **20406.** Code **20404** are the computer code instructions that allow the automotive controller to operate. Settings **20406** are the settings used to tune the engine for efficiency or performance, including settings for ignition timing advance, spark timing, fuel injection, electronic throttle control, poppet valve timing, boost control, an anti-lock braking system, an automatic transmission, a speed governor, an electronic stability control system, and so forth.

Parameters **20408** are the parameters for the gauges displayed on a client device, such as client device **110** of Figure 1. Parameter identifier (PID) **20410** is a numeric identifier that uniquely identifies the type of data from the automotive controller associated with the parameter. Name **20412** identifies the name of the parameter, which can include: engine coolant temperature, speed, revolutions per minute, battery voltage, transmission temperature, boost, calculated load, injector pressure, injector pulse width, throttle position sensor, and so on. Desired max **20414** is a numerical value that indicates a maximum desired value for the parameter. Desired min **20416** is a numerical value that indicates a minimum desired value for the parameter.

Warning max **20418** is a numerical value that indicates the beginning of an upper warning range. Warning min **20420** is a numerical value that indicates the end of a lower warning range. Continued operation of the vehicle with the values associated with the parameter above warning max **20418** or below warning min **20420** could lead to a breakdown of the engine.

Defuel max **20422** is a numerical value that indicates the threshold above which the vehicle will be defueled to prevent a breakdown. Defuel min **20424** is a numerical value that indicates the threshold below which the vehicle will be defueled to prevent a breakdown.

Gauge style **20426** identifies the style of the gauge that will be used to display the parameter values on the client device.

Available units **20428** is a list of units that can be used to display the values related to parameter **20408.** Selected units **20430** identifies which units of available units **20428** will be used to display the values of parameter **20408.**

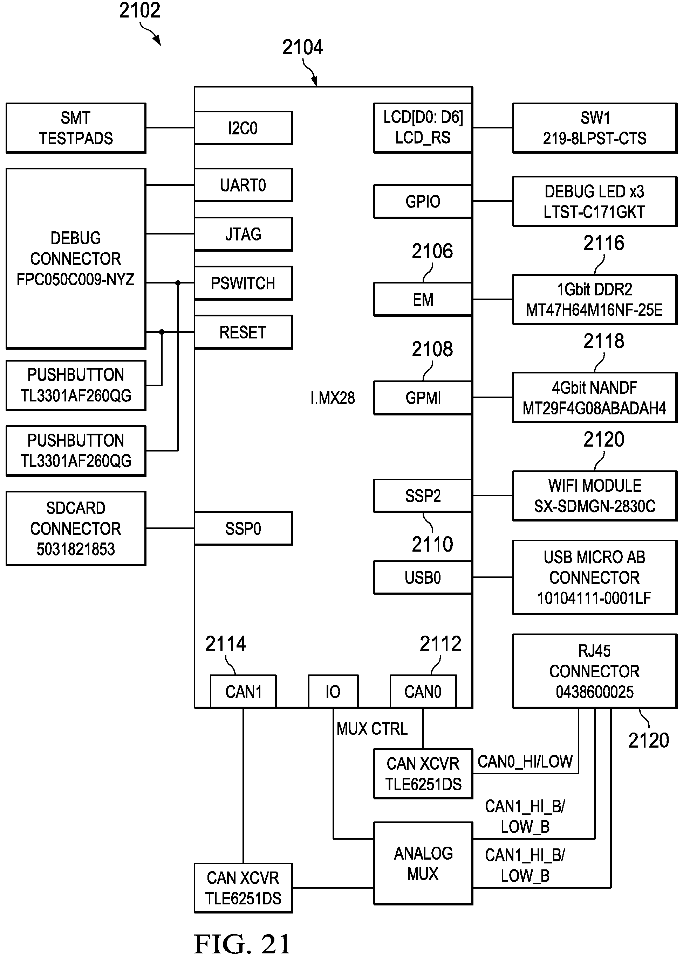

Referring to Figure 21, system **2102** is a system within local device **112** of Figure 1. System **2102** includes application processor **2104** that controls local device **112.** System **2102** includes: external memory interface (EMI) **2106,** general-purpose media interface (GPMI) **2108,** synchronous serial port (SSP) **2110** and controller area network (CAN) interfaces **2112** and **2114.**

EMI **2106** is connected to memory **2116** and GPMI **2108** is connected to memory **2118.** In one embodiment, memory **2118** is lower speed persistent memory that stores the programs and data run by application processor **2104** using memory **2116.**

SSP **2110** is connected to Wi-Fi module **2120** to allow for wireless communication. In one embodiment, program instructions stored one or more of memory **2116** and memory **2118** are executed by application processor **2104** so that local device **112** may function as an access point to which a client device can connect.

CAN0 interface **2112** is connected to a first CAN transceiver **2124** of a vehicle via the CAN0_HI/LOW link to connector **2122.** CAN1 interface **2114** is connected to a second CAN transceiver **2126** through analog multiplexer **2128** and connector **2122.** Analog multiplexer **2128** is connected to connector **2122** through two CAN1_HI_B/LOW_B lines. Input/Output multiplexer control 2113 is also connected to analog multiplexer **2128.** In one embodiment, connector **2122** is an RJ45 connector and an adapter (not shown) is connected between connector **2122** and the on-board diagnostics (OBD) port on the vehicle.

## Claims

**1.** A method of updating an engine control unit (ECU) (114) of a vehicle connected to a network, the network including a local device (112) that is electrically connected to the ECU (114), a client device (110) connected to the local device (112), and a server (102) connected to the client device (110), the method comprising:

establishing a data connection between the local device (112) and the ECU (114) using a diagnostic port;
establishing a wireless network connection between the local device (112) and the client device (110);
generating, by the client device (110), a first vehicle data request;
receiving, at the local device (112), the first vehicle data request;
retrieving, by the local device (112), first vehicle data, which comprises gauge data, from the ECU (114) based on the first vehicle data request;
transmitting, by the local device (112), the first vehicle data to the client device (110);
generating, by the client device (110), a second vehicle data request;
receiving, at the local device (112), the second vehicle data request;
retrieving, by the local device (112), second vehicle data, which comprises an engine code and frozen data, from the ECU (114) based on the second vehicle data request;
transmitting, by the local device (112), the second vehicle data to the client device (110);
transmitting, by the client device (110), a request for updated firmware, to the server (102) based on the first and second vehicle data;
receiving, at the client device (110), the updated firmware from the server (102) and selectable parameters for the ECU (114);

making, at the client device (110), a selection of parameters for the ECU (114) from the selectable parameters for the ECU (114);
receiving, at the local device (112), the updated firmware from the client device (110) including the selected parameters for the ECU (114); and,
loading, from the local device (112), the updated firmware onto the ECU (114), wherein loading the updated firmware changes at least one of the selected parameters for the ECU (114).

**2.** The method of claim 1, further comprising: receiving, at the local device (112), a parameter identifier request from the client device (110);

recording the parameter identifier request in the local device (112); and,
receiving, at the local device (112), parameter identifier data from the ECU (114) in response to the parameter identifier request, preferably wherein the parameter identifier request relates to one of engine coolant temperature, speed, revolutions per minute, battery voltage, transmission temperature, boost, calculated load, injector pressure, injector pulse width, and throttle position sensor.

**3.** The method of claim 2, further comprising: sending, from the local device (112), the parameter identifier data to the client device (110), in response to the parameter identifier request; and,
displaying, at the client device (110), one or more gauges based on the parameter identifier data.

**4.** The method of claim 3, further comprising: receiving, at the local device (112), an engine check request from the client device (110).

**5.** The method of claim 1, wherein the network includes the server (102), which comprises a first server connected to the client device (110), and a second server (118) connected to the first server (102), the method comprising:

receiving, at the first server (102), the request from the client device (110) for the updated firmware for the ECU (114);
receiving, at the second server (118), the request for the one of the updated parameters for the ECU (114) and the updated firmware for the ECU (114), from the first server (102);
receiving, at the first server (102), the one of the updated parameters for the ECU (114) and the updated firmware for the ECU (114), from the second server (118);
sending, from the first server (102), the one of the updated parameters for the ECU (114) and the updated firmware for the ECU (114), to the client device (110).

**6.** The method of claim 5, further comprising: sending, from the first server (102), a request to the second server (118) for the updated firmware for the ECU (114).

**7.** The method of claim 5, further comprising: receiving, at the local device (112), an engine check request from the client device (110);

retrieving, by the local device (112), the engine code from the ECU (114);
retrieving, by the local device (112), the frozen data associated with the engine code from the ECU (114);
sending, from the local device (112), a check engine response to the client device (110) that includes the engine code and the frozen data;
sending, from the client device (110), the engine code and the frozen data to the first server (102);
sending, from the client device (110), a request for corrective firmware for the ECU (114) to the first server (102) based on the engine code;
storing the corrective firmware for the ECU (114) on the client device (110);
sending, by the client device (110), the corrective firmware for the ECU (114) to the local device (112); and,
sending, by the local device (112), the corrective firmware for the ECU (114) to the ECU (114).

**8.** The method of claim 1, wherein the first vehicle data includes parameter identifier data, the method comprising:

transmitting, by the local device (112), the parameter identifier data to the client device (110);
displaying, on the client device (110), the parameter identifier data received from the local device (112) on a gauge view of a multiple gauge view in a user interface (502).

**9.** The method of claim 8, further comprising: sending, by the client device (110), a parameter identifier request to the local device (112) for the parameter identifier data.

**10.** The method of claim 9, further comprising: receiving, at the client device (110), the parameter identifier data from the local device (112), in response to the parameter identifier request and after the parameter identifier request is recorded by the local device (112), preferably further comprising: sending, from the client device (110), an engine check request to the local device (112), preferably further comprising: displaying, on the client device (110), the engine code.

**Patentansprüche**

**1.** Verfahren zum Aktualisieren einer Motorsteuereinheit (ECU) (114) eines Fahrzeugs, das mit einem Netzwerk verbunden ist, wobei das Netzwerk eine lokale Vorrichtung (112), die elektrisch mit der ECU (114) verbunden ist, eine Clientvorrichtung (110), die mit der lokalen Vorrichtung (112) verbunden ist, und einen Server (102) einschließt, der mit der Clientvorrichtung (110) verbunden ist, das Verfahren umfassend:

Herstellen einer Datenverbindung zwischen der lokalen Vorrichtung (112) und dem ECU (114) unter Verwendung eines Diagnoseanschlusses;
Herstellen einer drahtlosen Netzwerkverbindung zwischen der lokalen Vorrichtung (112) und der Clientvorrichtung (110);
Erzeugen einer ersten Fahrzeugdatenanfrage durch die Clientvorrichtung (110);
Empfangen der ersten Fahrzeugdatenanfrage an der lokalen Vorrichtung (112);
Abrufen von ersten Fahrzeugdaten, die Messgerätedaten umfassen, von der ECU (114) durch die lokale Vorrichtung (112), basierend auf der ersten Fahrzeugdatenanfrage;
Übertragen der ersten Fahrzeugdaten durch die lokale Vorrichtung (112) an die Clientvorrichtung (110);
Erzeugen einer zweiten Fahrzeugdatenanfrage durch die Clientvorrichtung (110);
Empfangen der zweiten Fahrzeugdatenanfrage an der lokalen Vorrichtung (112);
Abrufen von zweiten Fahrzeugdaten, die einen Motorcode und eingefrorene Daten umfassen, durch die lokale Vorrichtung (112) von der ECU (114) basierend auf der zweiten Fahrzeugdatenanfrage;
Übertragen der zweiten Fahrzeugdaten durch die lokale Vorrichtung (112) an die Clientvorrichtung (110);
Übertragen einer Anfrage zur Firmwareaktualisierung durch die Clientvorrichtung (110) an den Server (102), basierend auf den ersten und zweiten Fahrzeugdaten;
Empfangen der aktualisierten Firmware vom Server (102) und wählbarer Parameter für die ECU (114) an der Clientvorrichtung (110);
Vornehmen einer Auswahl von Parametern für die ECU (114) an der Clientvorrichtung (110) aus den auswählbaren Parametern für die ECU (114);
Empfangen der aktualisierten Firmware von der Clientvorrichtung (110) an der lokalen Vorrichtung (112), einschließlich der ausgewählten Parameter für die ECU (114); und
Laden der aktualisierten Firmware von der lokalen Vorrichtung (112) auf die ECU (114), wobei das Laden der aktualisierten Firmware mindestens einen der ausgewählten Parameter für die ECU (114) ändert.

**2.** Verfahren nach Anspruch 1, ferner umfassend: Empfangen einer Parameteridentifizierungsanfrage von der Clientvorrichtung (110) an der lokalen Vorrichtung (112);

Aufzeichnen der Parameteridentifizierungsanfrage in der lokalen Vorrichtung (112); und
Empfangen von Parameteridentifizierungsdaten von der ECU (114) an der lokalen Vorrichtung (112) als Antwort auf die Parameteridentifizierungsanfrage, wobei sich die Parameteridentifizierungsanfrage vorzugsweise auf eines von Motorkühlmitteltemperatur, Drehzahl, Umdrehungen pro Minute, Batteriespannung, Getriebetemperatur, Ladedruck, berechnete Last, Einspritzdüsendruck, Einspritzdüsenpulsbreite und Drosselklappenpositionssensor bezieht.

**3.** Verfahren nach Anspruch 2, ferner umfassend: Senden der Parameteridentifizierungsdaten von der lokalen Vorrichtung (112) an die Clientvorrichtung (110) als Antwort auf die Parameteridentifizierungsanfrage; und
Anzeigen, an der Clientvorrichtung (110), eines oder mehrerer Messgeräte basierend auf den Parameteridentifizierungsdaten.

**4.** Verfahren nach Anspruch 3, ferner umfassend: Empfangen einer Motorprüfungsanfrage von der Clientvorrichtung (110) an der lokalen Vorrichtung (112).

**5.** Verfahren nach Anspruch 1, wobei das Netzwerk den Server (102) einschließt, der einen ersten Server, der mit der Clientvorrichtung (110) verbunden ist, und einen zweiten Server (118), der mit dem ersten Server (102) verbunden ist, umfasst, das Verfahren umfassend:

Empfangen der Anfrage von der Clientvorrichtung (110) nach der aktualisierten Firmware für die ECU (114) am ersten Server (102);
Empfangen der Anfrage nach einem der aktualisierten Parameter für die ECU (114) und der aktualisierten Firmware für die ECU (114) vom ersten Server (102) am zweiten Server (118);
Empfangen der aktualisierten Parameter für die ECU (114) oder der aktualisierten Firmware für die ECU (114) von dem zweiten Server (118) auf dem ersten Server (102);
Senden der aktualisierten Parameter für die ECU (114) oder der aktualisierten Firmware für die ECU (114) von dem ersten Server (102) an die Clientvorrichtung (110).

**6.** Verfahren nach Anspruch 5, ferner umfassend: Senden einer Anfrage vom ersten Server (102) an den zweiten Server (118) nach der aktualisierten Firmware für das ECU (114).

**7.** Verfahren nach Anspruch 5, ferner umfassend: Empfangen einer Motorprüfungsanfrage von der Clientvorrichtung (110) an der lokalen Vorrichtung (112);

Abrufen des Motorcodes von der ECU (114) durch die lokale Vorrichtung (112);
Abrufen der dem Motorcode zugeordneten eingefrorenen Daten von der ECU (114) durch die lokale Vorrichtung (112);
Senden, von der lokalen Vorrichtung (112), einer Motorprüfantwort an die Clientvorrichtung (110), die den Motorcode und die eingefrorenen Daten einschließt;
Senden des Motorcodes und der eingefrorenen Daten von der Clientvorrichtung (110) an den ersten Server (102);
Senden einer Anfrage nach korrigierender Firmware für die ECU (114) von der Clientvorrichtung (110) an den ersten Server (102), basierend auf dem Motorcode;
Speichern der korrigierenden Firmware für die ECU (114) auf der Clientvorrichtung (110);
Senden der korrigierenden Firmware für die ECU (114) durch die Clientvorrichtung (110) an die lokale Vorrichtung (112); und
Senden der korrigierenden Firmware für die ECU (114) durch die lokale Vorrichtung (112) an die ECU (114).

**8.** Verfahren nach Anspruch 1, wobei die ersten Fahrzeugdaten Parameteridentifizierungsdaten einschließen, das Verfahren umfassend:

Übertragen der Parameterkennungsdaten durch die lokale Vorrichtung (112) an die Clientvorrichtung (110);
Anzeigen, auf der Clientvorrichtung (110), der von der lokalen Vorrichtung (112) empfangenen Parameteridentifizierungsdaten auf einer Messgeräteansicht einer Mehrfachmessgeräteansicht in einer Benutzerschnittstelle (502).

**9.** Verfahren nach Anspruch 8, ferner umfassend: Senden einer Parameteridentifizierungsanfrage durch die Clientvorrichtung (110) an die lokale Vorrichtung (112) für die Parameteridentifizierungsdaten.

**10.** Verfahren nach Anspruch 9, ferner umfassend: Empfangen der Parameteridentifizierungsdaten an der Clientvorrichtung (110) von der lokalen Vorrichtung (112) als Reaktion auf die Parameteridentifizierungsanfrage und nachdem die Parameteridentifizierungsanfrage von der lokalen Vorrichtung (112) aufgezeichnet wurde, vorzugsweise ferner umfassend: Senden einer Motorprüfungsanfrage von der Clientvorrichtung (110) an die lokale Vorrichtung (112), vorzugsweise ferner umfassend: Anzeigen des Motorcodes auf der Clientvorrichtung (110).

## Revendications

**1.** Procédé de mise à jour d'une unité de commande moteur (ECU) (114) d'un véhicule connecté à un réseau, le réseau comportant un dispositif local (112) qui est connecté électriquement à l'ECU (114), un dispositif client (110) connecté au dispositif local (112), et un serveur (102) connecté au dispositif client (110), le procédé comprenant :

l'établissement d'une connexion de données entre le dispositif local (112) et l'ECU (114) à l'aide d'un port de diagnostic ;
l'établissement d'une connexion réseau sans fil entre le dispositif local (112) et le dispositif client (110) ;
la génération, par le dispositif client (110), d'une première demande de données de véhicule ;
la réception, au niveau du dispositif local (112), de la première demande de données de véhicule ;
la récupération, par le dispositif local (112), de premières données de véhicule, qui comprennent des données de jauge, à partir de l'ECU (114) sur la base de la première demande de données de véhicule ;
la transmission, par le dispositif local (112), des premières données de véhicule au dispositif client (110) ; la génération, par le dispositif client (110), d'une seconde demande de données de véhicule ;
la réception, au niveau du dispositif local (112), de la seconde demande de données de véhicule ;
la récupération, par le dispositif local (112), de secondes données de véhicule, qui comprennent un code moteur et des données gelées, à partir de l'ECU (114) sur la base de la seconde demande de données de véhicule ;
la transmission, par le dispositif local (112), des secondes données de véhicule au dispositif client (110) ;
la transmission, par le dispositif client (110), d'une demande de micrologiciel mis à jour, au serveur (102) sur la base des premières et secondes données de véhicule ;
la réception, au niveau du dispositif client (110), du micrologiciel mis à jour à partir du serveur (102) et de paramètres sélectionnables pour l'ECU (114) ;
la réalisation, au niveau du dispositif client (110), d'une sélection de paramètres pour l'ECU (114) à partir des paramètres sélectionnables pour l'ECU (114) ;
la réception, au niveau du dispositif local (112), du micrologiciel mis à jour à partir du dispositif client (110) comportant les paramètres sélectionnés pour l'ECU (114) ; et,
le chargement, à partir du dispositif local (112), du micrologiciel mis à jour sur l'ECU (114), dans lequel le chargement du micrologiciel mis à jour modifie au moins l'un des paramètres sélectionnés pour l'ECU (114).

**2.** Procédé selon la revendication 1, comprenant en outre : la réception, au niveau du dispositif local (112), d'une demande d'identificateur de paramètre à partir du dispositif client (110) ;

l'enregistrement de la demande d'identificateur de paramètre dans le dispositif local (112) ; et,
la réception, au niveau du dispositif local (112), de données d'identificateur de paramètre à partir de l'ECU (114) en réponse à la demande d'identificateur de paramètre, de préférence dans lequel la demande d'identificateur de paramètre se rapporte à l'un parmi une température de liquide de refroidissement de moteur, une vitesse, des tours par minute, une tension de batterie, une température de transmission, une suralimentation, une charge calculée, une pression d'injecteur, une largeur d'impulsion d'injecteur et le capteur de position d'accélérateur.

**3.** Procédé selon la revendication 2, comprenant en outre : l'envoi, à partir du dispositif local (112), des données d'identificateur de paramètre au dispositif client (110), en réponse à la demande d'identificateur de paramètre ; et, l'affichage, au niveau du dispositif client (110), d'une ou plusieurs jauges sur la base des données d'identificateur de paramètre.

**4.** Procédé selon la revendication 3, comprenant en outre : la réception, au niveau du dispositif local (112), d'une demande de vérification de moteur à partir du dispositif client (110).

**5.** Procédé selon la revendication 1, dans lequel le réseau comporte le serveur (102), qui comprend un premier serveur connecté au dispositif client (110), et un second serveur (118) connecté au premier serveur (102), le procédé comprenant :

la réception, au niveau du premier serveur (102), de la demande à partir du dispositif client (110) pour le micrologiciel mis à jour pour l'ECU (114) ;
la réception, au niveau du second serveur (118), de la demande de l'un des paramètres mis à jour pour l'ECU (114) et du micrologiciel mis à jour pour l'ECU (114), à partir du premier serveur (102) ;
la réception, au niveau du premier serveur (102), de l'un des paramètres mis à jour pour l'ECU (114) et du micrologiciel mis à jour pour l'ECU (114), à partir du second serveur (118) ;
l'envoi, à partir du premier serveur (102), de l'un des paramètres mis à jour pour l'ECU (114) et du micrologiciel mis à jour pour l'ECU (114), au dispositif client (110).

**6.** Procédé selon la revendication 5, comprenant en outre : l'envoi, à partir du premier serveur (102), d'une demande au second serveur (118) pour le micrologiciel mis à jour pour l'ECU (114).

**7.** Procédé selon la revendication 5, comprenant en outre : la réception, au niveau du dispositif local (112), d'une demande de vérification de moteur à partir du dispositif client (110) ;

la récupération, par le dispositif local (112), du code moteur à partir de l'ECU (114) ;
la récupération, par le dispositif local (112), des données gelées associées au code moteur à partir de l'ECU (114) ;
l'envoi, à partir du dispositif local (112), d'une réponse de moteur de vérification au dispositif client (110) qui comporte le code moteur et les données gelées ;
l'envoi, à partir du dispositif client (110), du code moteur et des données gelées au premier serveur (102) ;
l'envoi, à partir du dispositif client (110), d'une demande de micrologiciel correctif pour l'ECU (114) au premier serveur (102) sur la base du code moteur ;
le stockage du micrologiciel correctif pour l'ECU (114) sur le dispositif client (110) ;
l'envoi, par le dispositif client (110), du micrologiciel correctif pour l'ECU (114) au dispositif local (112) ; et,
l'envoi, par le dispositif local (112), du micrologiciel correctif pour l'ECU (114) à l'ECU (114).

**8.** Procédé selon la revendication 1, dans lequel les premières données de véhicule comportent des données d'identificateur de paramètre, le procédé comprenant :

la transmission, par le dispositif local (112), des données d'identificateur de paramètre au dispositif client (110) ;
l'affichage, sur le dispositif client (110), des données d'identificateur de paramètre reçues à partir du dispositif local (112) sur une vue de jauge d'une vue de jauge multiple dans une interface utilisateur (502).

**9.** Procédé selon la revendication 8, comprenant en outre : l'envoi, par le dispositif client (110), d'une demande d'identificateur de paramètre au dispositif local (112) pour les données d'identificateur de paramètre.

**10.** Procédé selon la revendication 9, comprenant en outre : la réception, au niveau du dispositif client (110), des données d'identificateur de paramètre à partir du dispositif local (112), en réponse à la demande d'identificateur de paramètre et après l'enregistrement de la demande d'identificateur de paramètre par le dispositif local (112), comprenant en outre de préférence : l'envoi, à partir du dispositif client (110), d'une demande de vérification de moteur au dispositif local (112), comprenant en outre de préférence : l'affichage, sur le dispositif client (110), du code moteur.

100
116
DEALER SERVER
CLIENT DEVICE
110
118
108
CALIBRATION WRITER SERVER
INTERNET
LOCAL DEVICE
112
WEB SERVER
104
AUTOMOTIVE ONBOARD CONTROLLER
114
DATABASE
106
SYSTEM SERVER
102
S
S
A
A
120
120
122
122

FIG. 1

200
118
CALIBRATION WRITER SERVER
102
SYSTEM SERVER
110
CLIENT DEVICE
112
LOCAL DEVICE
114
AUTOMOTIVE CONTROLLER
203
SET UP ACCOUNT
201
SET UP ACCOUNT
202
UPLOAD ACCOUNT INFORMATION
ENTER OS SYSTEM PARAMETERS
204
SUBMIT PARAMETERS
206
208
STORES PARAMETERS
210
UPDATE DATABASE
212
UPLOAD PARAMETERS
214
STORES PARAMETERS
216
CHOOSE OPTIONS
OPEN APP
215
UPLOAD PARAMETERS
218
220
STORES PARAMETERS
222
UPLOAD PARAMETERS
224
STORES PARAMETERS
226
IMPLEMENTS PARAMETERS
GENERATES ACKNOWLEDGE SIGNAL
228
SEND ACKNOWLEDGE SIGNAL
230
231
STORES ACKNOWLEDGE SIGNAL
233
DISPLAY STATUS
REPORTS ACKNOWLEDGE SIGNAL
232

FIG. 2A

238
110
CLIENT DEVICE
LOCAL DEVICE
112
AUTOMOTIVE CONTROLLER
114
245
REQUEST UPLOAD
REQUEST LIVE DATA FEED
244
STORES DATA
SEND REQUEST
248
250
243
256
UPLOAD SYSTEM STATUS
SEND SYSTEM STATUS
STORES SYSTEM STATUS
252
260
UPLOAD SYSTEM STATUS
STORES SYSTEM STATUS
258
LOOP LIVE DATA REQUEST
261
DISPLAYS SYSTEM STATUS
262
REQUEST TO CLEAR ERROR CODES
265
UPLOAD REQUEST
STORES REQUEST
UPLOAD REQUEST
263
264
267
CLEAR ERROR CODE
REQUEST DIAGNOSTIC REPORT
270
266
UPLOAD REQUEST
STORES REQUEST
UPLOAD REQUEST
268
269
272
GENERATE DIAGNOSTIC REPORT
274
SEND REPORT
271
276
SEND REPORT
STORES REQUEST
273
DISPLAY REPORT
275
REQUEST CALIBRATION REPORT
279
UPLOAD REQUEST
STORES REQUEST
UPLOAD REQUEST
277
278
281
ACCESS STORED PARAMETERS
283
SEND PARAMETERS
280
285
SEND PARAMETERS
STORE AND UPDATE
282
DISPLAYS PARAMETERS
284

FIG. 2B

300
302
HOME PAGE
304
CALIBRATION WRITERS
PHOTO/ LOGO
NAME
PHONE
ADDRESS
START DATE
EMAIL
SUBMIT COMPUTER CAL/PID
306
DEALERS
PHOTO/ LOGO
NAME
PHONE
ADDRESS
START DATE
EMAIL
308
CUSTOMERS
PHOTO OPTION
PHONE
START DATE
EMAIL
310
VEHICLES
VIN
ECU SERIAL #
MAKE
MODEL
ENGINE
FUEL TANK 1 OR 2
GEAR RATIO
TIRE SIZE
VEHICLE MODIFICATIONS
312
CUSTOMER PROFILES
CALIBRATION, PID CONFIGURATION AND WARNINGS
ALL VEHICLE OPTIONS WHEN CP ID# MADE
DATALOG RECORDINGS
INFORMATION IN COMPUTER PROFILE WILL PREPOPULATE "VEHICLE INFO"
CALIBRATION WRITER WILL SUBMIT ALL INFO FOR COMPUTER PROFILE

FIG. 3

118
CALIBRATION WRITER SERVER
102
SYSTEM SERVER
110
CLIENT DEVICE
112
LOCAL DEVICE
114
AUTOMOTIVE CONTROLLER
400
411
GENERATE CHECK ENGINE CODE AND STORE FROZEN DATA
413
ESTABLISH WIRELESS CONNECTION
ESTABLISH DATA CONNECTION
412
GAUGE DATA REQUEST
414
GAUGE DATA REQUEST
415
416
RETRIEVE GAUGE DATA
REQUESTED DATA
417
LOG DATA
418
REQUESTED DATA
419
DISPLAY DATA
420
ENGINE CODE, FROZEN DATA AND LOG REQUEST
421
ENGINE CODE AND FROZEN DATA REQUEST
422
423
RETRIEVE ENGINE CODE AND FROZEN DATA
ENGINE CODE AND DATA
424
ENGINE CODE, DATA, AND LOG
425
STORE ENGINE CODE, FROZEN DATA, AND LOG
426
A

FIG. 4A

400
118
CALIBRATION WRITER SERVER
102
SYSTEM SERVER
110
CLIENT DEVICE
112
LOCAL DEVICE
114
AUTOMOTIVE CONTROLLER
427
A
DISPLAY ENGINE CODE
428
ENGINE CODE, FROZEN DATA, AND LOG
REQUEST UPDATED PARAMETERS/ FIRMWARE BASED ON CODE, DATA, AND LOG
429
REQUEST UPDATED FIRMWARE BASED ON CODE, DATA, AND LOG
430
UPDATED PARAMETERS/FIRMWARE
431
UPDATED PARAMETERS/FIRMWARE
432
433
STORE UPDATES
434
SELECT PARAMETERS AND FIRMWARE
PARAMETER AND FIRMWARE SELECTIONS
435
REPROGRAMMING INSTRUCTIONS
436
437
UPDATE FIRMWARE/ PARAMETERS

FIG. 4B

502

GAUGE SCREEN
504
Z LYNK
506
526
510
512
528
530
514
508
532
516
Eng. Coolant Temp
Speed
RPM
Battery Voltage
542
156.0
544
31.0
746
546
2.00
548
558
°F
560
MPH
RPM
562
V
564
Transmission Temp.
534
Throttle Position Sensor
536
Calculated Load
538
Injector Pressure
540
550
219.0
552
35
35
554
25.0
556
566
°F
568
%
%
570
kPSI
572
518
520
522
524

FIG. 5A

DRAG AND DROP
Z LYNK
524
Eng. Coolant Temp
Speed
Injector Pressure
Battery Voltage
-16.0
70.0
22.0
1.00
°F
MPH
kPSI
RPM
1031
RPM
Transmission Temp.
Throttle Position Sensor
Calculated L
83.0
74
74
°F
%
%
514

FIG. 5B

502
SELECT GAUGE
Z LYNK
512
514
604
606
Speed
148.0
MPH
RPM
865
RPM
RPM, RPM
3000
2000
4000
1000
5000
0
6000
865
RPM
R
608
610
Transmission Temp.
290.0
°F
Throttle Position Sensor
53
%
518
520

FIG. 6A

502
SLIDE TOP 4 GAUGES
Z LYNK
512
514
516
604
606
peed
0.0
MPH
RPM
1360
RPM
Batte
18
RPM, RPM
3000
2000
4000
1000
5000
0
6000
1360
RPM
P
608
Transmission Temp.
288.0
°F
Throttle Position Sensor
43
%

FIG. 6B

502

SLIDE BOTTOM 4 GAUGES

Z LYNK

604 606

| Speed | RPM |
|---|---|
| 144.0 | 1463 |
| MPH | RPM |

| culated Load | Injector Pressure |
|---|---|
| 45 | 21.0 |
| % | kPSI |

RPM, RPM

3000 2000 4000 1000 5000 0 6000

1464

RPM

P/N

610

522 524

FIG. 6C

502

SELECT PID BY SLIDING UP (OR DOWN)

Z LYNK

514 604 606

| Speed | RPM |
|---|---|
| 105.0 | 1653 |
| MPH | RPM |
| Transmission Temp. | Throttle Position Sensor |
| -38.0 | 59 |
| °F | % |

RPM, RPM

3000 2000 4000 1000 5000 0 6000

1653

RPM

P/N

FIG. 7A

SELECT PID BY SLIDING UP (OR DOWN)
Z LYNK
514
606
Speed
229.0
MPH
RPM
1663
RPM
1000
0
1663
RPM
5000
6000
P/N
3 of 40
Transmission Temp.
86.0
°F
Throttle Position Sensor
82
%
BATTERY VOLTAGE, V
8.00 10.00
6.00
12.00
4.00
14.00
706

FIG. 7B

SELECT PID BY SLIDING UP (OR DOWN)
Z LYNK
714
706
Speed
272.0
MPH
Battery Voltage
14.00
V
BATTERY VOLTAGE, V
8.00 10.00
6.00
12.00
4.00
14.00
2.00
16.00
0.00
18.00
14.00
V
R
Transmission Temp.
129.0
°F
Throttle Position Sensor
24
%

FIG. 7C

502
SELECTING FIRST GAUGE STYLE
Z LYNK
804
Speed
293.0
MPH
RPM
1613
RPM
808
RPM, RPM
810
812
GAUGE STYLE
802
LEVELS
Adjust parameters
>
Units
RPM
Throttle Position Sensor
93
°F
Calculated Load
93
%

FIG. 8A

SELECTING FIRST GAUGE STYLE
Z LYNK
606
Speed
148.0
MPH
RPM
865
RPM
816
RPM, RPM
818
806
828
3000
2000
4000
1000
5000
820
865
826
0
822
RPM
6000
814
R
824
Transmission Temp.
290.0
°F
Throttle Position Sensor
53
%

FIG. 8B

SELECTING SECOND GAUGE STYLE
Z LYNK
804
Speed
197.0
MPH
RPM
1818
RPM
RPM, RPM
GAUGE STYLE
902
LEVELS
Adjust parameters
>
Units
RPM
Throttle Position Sensor
96
%
Calculated Load
96
%

FIG. 9A

SELECTING SECOND GAUGE STYLE
Z LYNK
606
Speed
230.0
MPH
RPM
1851
RPM
RPM, RPM
904
908
1500
3000
4500
906
0
6000
1851
RPM
P/N
Throttle Position Sensor
28
°F
Calculated Load
28
%

FIG. 9B

SELECTING THIRD GAUGE STYLE

Z LYNK
804
Speed
274.0
MPH
RPM
1895
RPM
RPM, RPM
1002
GAUGE STYLE
LEVELS
Adjust parameters
Units
RPM
Throttle Position Sensor
72
%
Calculated Load
72
%

FIG. 10A

SELECTING THIRD GAUGE STYLE

Z LYNK
606
Speed
3.0
MPH
RPM
1925
RPM
RPM, RPM
6000
4500
3000
1500
0
1008
1925
RPM
1006
1004
P/N
Throttle Position Sensor
0
%
Calculated Load
0
%

FIG. 10B

SELECTING FOURTH GAUGE STYLE
Z LYNK
804
Speed
61.0
MPH
RPM
1983
RPM
RPM, RPM
1102
GAUGE STYLE
LEVELS
Adjust parameters
Units
RPM
Throttle Position Sensor
59
%
Calculated Load
59
%

FIG. 11A

SELECTING FOURTH GAUGE STYLE
Z LYNK
606
RPM
2787
RPM
Battery Voltage
5.00
V
RPM, RPM
Actual
2787
RPM
1104
5,000
0
12:09:18
Transmission Temp.
64.0
°F
Throttle Position Sensor
54
%

FIG. 11B

502
ADJUST PARAMETERS
Z LYNK
604
606
Speed
228.0
MPH
RPM
1214
RPM
Transmission Temp.
212.0
°F
Throttle Position Sensor
7
%
816
RPM, RPM
818
806
828
3000
2000
4000
1202
1000
5000
1214
826
0
RPM
6000
P/N

FIG. 12A

ADJUST PARAMETERS
Z LYNK
804
Speed
293.0
MPH
RPM
1613
RPM
Throttle Position Sensor
93
%
Calculated Load
93
%
RPM, RPM
GAUGE STYLE
LEVELS
Adjust parameters
1204
>
Units
RPM

FIG. 12B

1206
ADJUST PARAMETERS
Cancel
1208
LEVELS
1210
Done
1212
RPM, RPM
1214
1216
DESIRED
1218
1220
2700
3250
0
6000 RPM
1222
WARNING
1224
1226
2475
3450
0
6000 RPM
1228
DEFUEL
1230
1232
2000
3875
0
6000 RPM

FIG. 12C

ADJUST PARAMETERS
Cancel
LEVELS
Done
RPM, RPM
DESIRED
1218
1220
1700
4075
0
6000 RPM
WARNING
1224
1226
1700
4075
0
6000 RPM
DEFUEL
1230
1232
1700
4075
0
6000 RPM

FIG. 12D

ADJUST PARAMETERS
Cancel
LEVELS
Done
RPM, RPM
1218
1220
DESIRED
2300
3775
0
6000 RPM
1224
1226
WARNING
2300
3775
0
6000 RPM
DEFUEL
1700
4075
0
6000 RPM

FIG. 12E

ADJUST PARAMETERS
Cancel
LEVELS
Done
RPM, RPM
DESIRED
2300
3775
0
6000 RPM
1224
1226
WARNING
1400
4350
0
6000 RPM
1230
1232
DEFUEL
1400
4350
0
6000 RPM

FIG. 12F

ADJUST PARAMETERS
Cancel
LEVELS
Done
RPM, RPM
1218
1220
DESIRED
2500
3625
0
6000 RPM
1224
1226
WARNING
2500
3625
0
6000 RPM
1230
1232
DEFUEL
2500
3625
0
6000 RPM

FIG. 12G

UNCHECK "DESIRED"
Cancel
LEVELS
Done
1216
RPM, RPM
1210
DESIRED
2800
3200
0
6000 RPM
WARNING
600
4000
0
6000 RPM
DEFUEL
0
6000
0
6000 RPM

FIG. 12H

UNCHECK "DESIRED"

Z LYNK

606

Speed
85.0
MPH

**RPM**
**188**
**RPM**

Transmission Temp.
175.0
°F

Throttle Position Sensor
20
%

RPM, RPM
3000
2000
4000
1000
5000
0
6000
188
RPM
P

FIG. 12I

502
SELECT UNITS
Z LYNK
604
804
RPM
3757
RPM
Battery Voltage
16.00
V
TRANSMISSION TE...
GAUGE STYLE
LEVELS
Adjust parameters
Transmission Temp.
158.0
566
°F
518
Throttle Position Sensor
13
%
Units
1304
1302
°C
°F

FIG. 13A

SELECT UNITS
Z LYNK
RPM
3799
RPM
Battery Voltage
12.00
V
TRANSMISSION TE...
GAUGE STYLE
LEVELS
Adjust parameters
Units
°C
1302
°F
1304
Transmission Temp.
88.9
566
°C
518
Throttle Position Sensor
55
%

FIG. 13B

502
SLIDE FOR ALTERNATE DISPLAY
Z LYNK
508
°F
MPH
RPM
V
Transmission Temp.
127.0
°F
Throttle Position Sensor
96
%
Calculated Load
96
%
Injector Pressure
46.0
kPSI
RPM, RPM
4144
130.0
87.5
172.5
45.0
215.0
Transmission Temp.
Eng. Coolant Temp, °F
149.0

FIG. 14A

14101

14101
SLIDE FOR ALTERNATE DISPLAY
14205
14203
14202
Z LYNK
14215 14216
RPM, RPM
14221
14218
14233
14236
14230
14231
Eng. Coolant Temp, °F
14220
14212
130.0
87.5
172.5
14213
14235
14219
45.0
Transmission Temp.
215.0
14234
4328
14214
240.0
14217
14225
14229
2.5
14207
274.0
257.5
14239
14232
15.00
14208
299.0
14228
-40.0
°F
14209
300.0
14241
Battery Voltage, V
14211
R
Speed, MPH
14227
14223
14224
14226
14210
14240
14237
14238
14204
14206

FIG. 14B

14301
SELECT GAUGE
14302
Z LYNK
14304
14306
RPM
Transmission Temp.
Eng. Coolant Temp
TRANSMISSION TEMP., °F
4394 RPM
270.0 °F
-16.0 °F
18.00 V
62.0 MPH
14308
14303
14307
Battery Voltage
14305
Speed
130.0
87.5
172.5
14309
45.0
215.0
2.5
-16.0
257.5
-40.0
°F
300.0
P/N

FIG. 14C

14301
EDIT SETTINGS
Z LYNK
14401
RPM
Transmission Temp.
Eng. Coolant Temp
4777 RPM
292.0 °F
125.0 °F
7.00 V
145.0 MPH
Battery Voltage
14303
Speed
TRANSMISSION TE...
GAUGE STYLE
LEVELS
Adjust parameters
Units
14310
°C
°F

FIG. 14D

14301
CHANGE UNITS
Z LYNK
RPM
Transmission Temp.
Eng. Coolant Temp
5067 RPM
83.9 °C
269.0 °F
17.00 V
134.0 MPH
Battery Voltage
14303
Speed
TRANSMISSION TE...
GAUGE STYLE
LEVELS
Adjust parameters
Units
°C
°F

FIG. 14E

14301
SLIDE TO CHANGE SELECTED GAUGE
14302
Z LYNK
RPM
Transmission Temp.
Eng. Coolant Temp
325 RPM
168.0 °F
216.0 °F
0.00 V
189.0 MPH
Battery Voltage
14303
Speed
TRANSMISSION TEMP., °F
87.5
130.0
172.5
45.0
215.0
2.5
5 of 40
257.5
°F
-40.0
300.0
R

FIG. 15A

SLIDE TO CHANGE
14302
Z LYNK
RPM
Transmission Temp.
Eng. Coolant Temp
594 RPM
41.0 °F
9.0 °F
3.00 V
157.0 MPH
Battery Voltage
Speed
2.5
41.0
257.5
°F
-40.0
300.0
P
6 of 40
20.0
25.0
30.0
15.0
35.0
10.0
40.0
1502

FIG. 15B

SLIDE TO CHANGE SELECTED GAUGE
Z LYNK
RPM
Boost
Eng.
Coolant
Temp
897
RPM
161.0
°F
29.0
PSI
18.00
V
159.0
MPH
Battery
Voltage
1506
1504
Speed
BOOST, PSI
20.0
25.0
30.0
15.0
35.0
10.0
40.0
5.0
29.0
45.0
0.0
PSI
50.0
P
1502

FIG. 15C

SELECT GAUGE
Z LYNK
14306
RPM
Boost
1510
Eng.
Coolant
Temp
1100
RPM
263.0
°F
28.0
PSI
16.00
V
64.0
MPH
Battery
Voltage
1504
Speed
ENG. COOLANT TEMP, °F
45.0
130.0
215.0
-40.0
300.0
263.0
°F
R
1508

FIG. 15D

502
1602
VEHICLE MANAGEMENT
My Gauges
1604
504
508
Z LYNK
My Vehicles
1606
Eng. Coolant Temp
Speed
R
Program
1608
265.0
4.0
17
°F
MPH
R
Diagnostics
1610
Transmission Temp.
Throttle Position Sensor
Calcula
Datalog
1612
0.0
47
4
Settings
1614
°F
%

FIG. 16A

1616
VEHICLE MANAGEMENT
MY VEHICLES
1618
2015 Ford 6.7L ** Demo Mode **
VIN: 1FTFW1CF0FKE18411
CONNECTED
>

FIG. 16B

1620
VEHICLE MANAGEMENT
< Back
2015 FORD 6.7L ** DEMO MODE **
1622
Shared with
0 technicians
Manage Shares
Current ECU Profile
Unknown ECU profile
Manage ECU Profiles
1624

FIG. 16C

1626
VEHICLE MANAGEMENT
< Back
MANAGE SHARES
1628
2015 Ford 6.7L ** Demo Mode **
VIN: 1FTFW1CF0FKE18411
Shares
SHARED WITH

FIG. 16D

1630
VEHICLE MANAGEMENT
< Back
SHARE VEHICLE WITH TECHNICIAN
1632
|Technician's email
1636
OK
1634
q w e r t y u i o p
a s d f g h j k l
z x c v b n m
123
space
@
Done

FIG. 16E

502
1602
DIAGNOSTICS
My Gauges
My Vehicles
Program
Diagnostics
1610
Datalog
Settings
Z LYNK
Eng. Coolant Temp
265.0
°F
Speed
4.0
MPH
Transmission Temp.
0.0
°F
Throttle Position Sensor
47
%
Calcula

FIG. 17A

DIAGNOSTICS

1702

DIAGNOSTICS DEFINITION OF CODES

1704

[P] Engine and automatic transmission

0003 Fuel Volume Regulator Control Circuit Low

0004 Fuel Volume Regulator Control Circuit High

[U] Electronic system

2001 Lost communication with BCM

[C]

FIG. 17B

DIAGNOSTICS

1702

DIAGNOSTICS DEFINITION OF CODES

0004 Fuel Volume Regulator Control Circuit High

[U] Electronic system

2001 Lost communication with BCM

[C]

[B]

2201 Not sure?

FIG. 17C

502
1602
DATALOG
My Gauges
My Vehicles
Program
Diagnostics
Datalog
1612
Settings
Z LYNK
Eng. Coolant Temp
Speed
265.0
4.0
°F
MPH
Transmission Temp.
Throttle Position Sensor
Calcula
0.0
47
°F
%

FIG. 18A

1802
DATALOG
DATALOG
1804
21/06/2016 12:22:32
Send
1806

FIG. 18B

502
SETTINGS
My Gauges
My Vehicles
Program
Diagnostics
Datalog
Settings
1614
Z LYNK
Eng. Coolant Temp
265.0
°F
Speed
4.0
MPH
R
17
R
Transmission Temp.
0.0
°F
Throttle Position Sensor
47
%
Calcula
4

FIG. 19A

SETTINGS
1902
SETTINGS
Log Out
CONTACT INFORMATION
1904
Tom Wood
tjw5431@gmail.com
>
HELP
1906
1908
i View tutorial
Send application logs via email
ABOUT

FIG. 19B

SETTINGS
SETTINGS
Log Out
ABOUT
App version
1910
1.0.310
Firmware version
1912
10.00.03
RSSI
1914
35
DEBUG SETTINGS

FIG. 19C

SETTINGS
SETTINGS
Log Out
RSSI
36
DEBUG SETTINGS
1916
Server IP
200.100.200.1
Connect to server
1918
1920
Client protocol version
17
18
19

FIG. 19D

20100
SERVER DATABASE
VEHICLES
TECHNICIANS
ECU PROFILES
20102
20104
20106
20200
VEHICLE RECORD
VIN
YEAR
MAKE
MODEL
TECHNICIANS
ECU PROFILES
20202
20204
20206
20208
20210
20212

FIG. 20A

FIG. 20B

20300
TECHNICIAN RECORD
NAME
EMAIL
VEHICLES
CLIENT DEVICE DATA
20302
20304
20308
20310

FIG. 20C

20400
ECU PROFILE RECORD
FIRMWARE
CODE
SETTINGS
PARAMETER(S)
PID
NAME
DESIRED MAX
DESIRED MIN
WARNING MAX
WARNING MIN
DEFUEL MAX
DEFUEL MIN
GAUGE STYLE
AVAILABLE UNITS
SELECTED UNITS
20402
20404
20406
20408
20410
20412
20414
20416
20418
20420
20422
20424
20426
20428
20430

FIG. 20D

2102
2104
SMT TESTPADS
I2C0
LCD[D0: D6] LCD_RS
SW1 219-8LPST-CTS
DEBUG CONNECTOR FPC050C009-NYZ
UART0
JTAG
PSWITCH
RESET
GPIO
DEBUG LED x3 LTST-C171GKT
2106
EM
2116
1Gbit DDR2 MT47H64M16NF-25E
2108
2118
PUSHBUTTON TL3301AF260QG
PUSHBUTTON TL3301AF260QG
I.MX28
GPMI
4Gbit NANDF MT29F4G08ABADAH4
2120
SSP2
WIFI MODULE SX-SDMGN-2830C
SDCARD CONNECTOR 5031821853
SSP0
2110
USB0
USB MICRO AB CONNECTOR 10104111-0001LF
2114
2112
RJ45 CONNECTOR 0438600025
CAN1
IO
CAN0
2120
MUX CTRL
CAN XCVR TLE6251DS
CAN0_HI/LOW
CAN1_HI_B/ LOW_B
ANALOG MUX
CAN1_HI_B/ LOW_B
CAN XCVR TLE6251DS


FIG. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013086345 A
- US 20130246135 A
- EP 2869221 A
- US 2006047381 A